# EUROPEAN PATENT APPLICATION

(11) **EP 4 782 501 A1**
(43) Date of publication of application: **29.07.2026**
(21) Application number: 24868118.1
(22) Date of filing: 03.09.2024
(51) Int. Cl.: C08L 33/12, C08F 265/06, C08L 51/00, C08L 53/00, G02B 1/04, G02B 5/30, G02F 1/1335

(54) **RESIN COMPOSITION, MOLDING MATERIAL, RESIN MOLDED BODY AND FILM, AND METHOD FOR PRODUCING SAME**

(30) Priority: 19.09.2023 JP 2023151439
(71) Applicant: Mitsubishi Chemical Corporation, Tokyo 100-8251 (JP)
(72) Inventor: OTANI, Go, Tokyo 100-8251 (JP)
(74) Representative: Ter Meer Steinmeister & Partner
(86) International application number: PCT/JP2024/031599
(87) International publication number: WO 2025/063040

(57) **Abstract**

A resin composition and a method for producing the same, the resin composition containing a (meth)acrylic polymer (A) that is a random copolymer and/or a homopolymer and a (meth)acrylic copolymer (B) that is a block copolymer and/or a graft copolymer, wherein the (meth)acrylic polymer (A) contains a repeating unit derived from methyl methacrylate in an amount of 50 mass% or more, the (meth)acrylic polymer (A) contains a (meth)acrylic polymer (A1) having a mass average molecular weight calibrated with polystyrene of more than 130000 as determined by gel permeation chromatography (GPC) measurement, the (meth)acrylic copolymer (B) is a polymer containing a polymer (B1) and a polymer (B2) in the same molecule, the polymer (B1) is a polymer containing a unit derived from methyl methacrylate in an amount of 50 mass% or more and having a glass transition temperature of higher than 0°C, and the polymer (B2) is a polymer having a glass transition temperature of 0°C or lower.

## Description

### Technical Field

The present invention relates to a resin composition, a molding material containing the resin composition, a resin molded body and a film using the molding material, and a method for producing these.

### Background Art

Acrylic resins are excellent in transparency, weather resistance, high elastic modulus, surface hardness, and the like, and thus are widely used for front plates for displays such as liquid crystal displays and organic EL displays, signboard articles, lighting articles, household electrical appliances, vehicle interior and exterior materials, industrial materials, building materials, lenses, light guide plates, light condensing members, optical films used for displays such as liquid crystal displays and organic EL displays, and the like.

It is required to impart flexibility to acrylic resin products in some of these applications. In addition, there is a demand for molding an acrylic resin into a thin shape or a complicated shape using a melt molding method such as injection molding or extrusion molding. That is, an acrylic resin having excellent melt moldability is required.

As a technique for improving the impact resistance of an acrylic resin, for example, Patent Literature 1 discloses a resin composition in which a rubber (core-shell rubber) having a core-shell structure having a core portion made of a crosslinked rubber and a shell portion that ensures compatibility and dispersibility with a (meth)acrylic polymer serving as a matrix is blended in a (meth)acrylic resin.

The resin composition described in Patent Literature 1, which contains the core-shell rubber, tends to have an increased melt viscosity and degraded melt moldability. Thus, there is a problem that the application of the resin composition is limited to a resin product having a large thickness or a resin product having a simple shape.

As a method for solving the problem, a resin composition in which a block copolymer and/or a graft copolymer is blended in a (meth)acrylic resin instead of a core-shell rubber is known. In the block copolymer and/or the graft copolymer, two or more polymer segments are linked to each other through a chemical bond. Thus, the phase separation structure of the resin composition in which the block copolymer and/or the graft copolymer having a poly (meth)acrylate chain is blended in an acrylic resin has a nanometer size (referred to as "microphase separation structure"). Therefore, in such a resin composition and a molded body produced by molding the resin composition, both the properties of the acrylic resin as a matrix and the properties of the block copolymer and/or the graft copolymer can be exhibited. Further, the properties of the polymer segment of each of the block copolymer and/or the graft copolymer can be exhibited.

The resin composition produced by blending the block copolymer and/or the graft copolymer in an acrylic resin forms a microphase separation structure. Thus, the resin molded body produced by molding the resin composition can favorably maintain the transparency of the acrylic resin, and is excellent in the properties (for example, flexibility and impact resistance) of each polymer segment of the block copolymer and/or the graft copolymer.

As a technique for improving the impact resistance of an acrylic resin using a block copolymer, for example, in Patent Literature 2, a block copolymer is obtained by a method of performing controlled radical polymerization in the presence of a nitroxide. Specifically, a technique is disclosed in which a sheet-form molded body containing a block copolymer is produced by a method for producing a cast sheet by putting a syrup in a mold and polymerizing the syrup. Patent Literature 2 describes that the obtained sheet-shaped molded body contains a (meth)acrylic resin and a block copolymer having a polymethyl methacrylate chain and an n-butyl acrylate styrene copolymer chain, and is excellent in impact resistance and transparency.

As a method for producing the block copolymer and/or the graft copolymer described above, a method is known in which an acrylic macromonomer (hereinafter, referred to as "macromonomer") is produced in advance using a very small amount of a cobalt complex having an extremely high chain transfer constant, and the macromonomer and another monomer are copolymerized to produce the block copolymer and/or the graft copolymer. As a method for producing an acrylic macromonomer using a cobalt complex, a catalytic chain transfer polymerization (CCTP) is known. The macromonomer is a high-molecular compound having a polymerizable functional group in the molecular structure, and may be referred to as a macromer.

Patent Literature 3 discloses a technique of producing a macromonomer through CCTP, then producing a macromonomer copolymer using the resulting macromonomer, and then adding the resulting macromonomer copolymer to an acrylic resin to achieve both impact resistance and transparency.

### Citation List

### Patent Literature

Patent Literature 1: JP S62-21804 A
Patent Literature 2: JP 2008-274290 A
Patent Literature 3: JP 2022-065185 A

### Summary of Invention

### Technical Problem

In the method described in Patent Literature 2, synthesis of a block copolymer, synthesis of polymethyl methacrylate as a matrix, and production of a molded body are simultaneously performed. Thus, there is a problem that the method is not suitable for a melt molding method, and the material cannot be molded into a thin shape or a complicated shape.

In the method described in Patent Literature 3, a molded body having good impact resistance and flexibility can be obtained with a molding material capable of melt molding and having excellent moldability. However, there is a problem that when a film is produced, the resulting film is easily torn, and the handleability is poor.

An object of the present invention is to provide a resin composition capable of forming a film having good handleability and further having excellent surface smoothness in an acrylic resin molding material containing a block copolymer and/or a graft copolymer, a molding material containing the resin composition, a resin molded body and a film obtained by molding the molding material, and a method for producing these.

### Solution to Problem

The present inventor has found that the above problems can be solved by combining and blending specific (meth)acrylic polymers.

That is, the gist of the present invention is as follows.
[1] A resin composition containing:
   a (meth)acrylic polymer (A) that is a random copolymer and/or a homopolymer; and
   a (meth)acrylic copolymer (B) that is a block copolymer and/or a graft copolymer, wherein
   the (meth)acrylic polymer (A) contains a repeating unit derived from methyl methacrylate in an amount of 50 mass% or more,
   the (meth)acrylic polymer (A) contains a (meth)acrylic polymer (A1) having a mass average molecular weight calibrated with polystyrene of more than 130000 as determined by gel permeation chromatography (GPC) measurement,
   the (meth)acrylic copolymer (B) is a polymer containing a polymer (B1) and a polymer (B2) in a same molecule,
   the polymer (B1) is a polymer containing a unit derived from methyl methacrylate in an amount of 50 mass% or more and having a glass transition temperature of higher than 0°C, and
   the polymer (B2) is a polymer having a glass transition temperature of 0°C or lower.
[2] The resin composition according to [1], wherein
   the (meth)acrylic polymer (A) further contains a (meth)acrylic polymer (A2),
   the (meth)acrylic polymer (A2) has a melt flow rate of 7.0 g/10 min or more under conditions of 230°C and 37.3 N in accordance with JIS K7210 or ISO 1133, and
   the (meth)acrylic polymer (A2) is contained in an amount of from 3 to 15 mass% relative to 100 mass% of a total of the resin composition.
[3] The resin composition according to [1] or [2], wherein the (meth)acrylic polymer (A1) has a melt flow rate of less than 7.0 g/10 min under conditions of 230°C and 37.3 N in accordance with JIS K7210 or ISO 1133.
[4] The resin composition according to any of [1] to [3], wherein the (meth)acrylic copolymer (B) is contained in an amount of 15 mass% or more relative to 100 mass% of a total of the resin composition.
[5] The resin composition according to any of [1] to [4], wherein the (meth)acrylic copolymer (B) has a mass average molecular weight of more than 300000.
[6] The resin composition according to any of [1] to [5], wherein the (meth)acrylic copolymer (B) contains a repeating unit derived from a macromonomer (b1) represented by General Formula (1) described below: 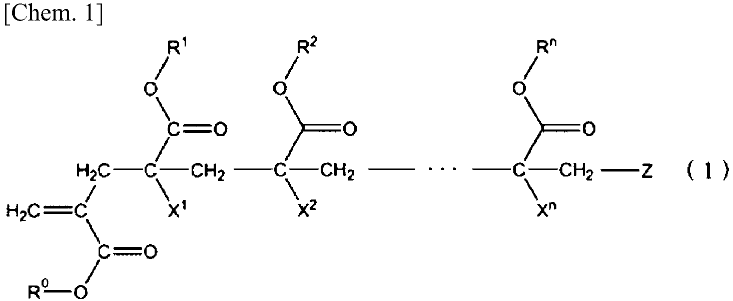 [in Formula (1), R⁰ to Rⁿ are each independently a hydrogen atom, an alkyl group, a cycloalkyl group, an aryl group, or a heterocyclic group; X¹ to Xⁿ are each independently a hydrogen atom or a methyl group; Z is a terminal group; and n is a natural number of from 1 to 10000].
[7] A molding material containing the resin composition described in any of [1] to [6].
[8] The molding material according to [7], wherein the molding material is a molding material for a film.
[9] The molding material according to [7], wherein the molding material is a molding material for an extruded film.
[10] A resin molded body produced by molding the molding material described in any of [7] to [9].
[11] An optical film produced by molding the molding material described in any of [7] to [9].
[12] A polarizing plate protective film produced by molding the molding material described in any of [7] to [9].
[13] A polarizing plate including the resin molded body described in [10].
[14] An image display device including the resin molded body described in [10].
[15] A method for producing a resin composition by mixing a (meth)acrylic polymer (A) that is a random copolymer and/or a homopolymer and
   a (meth)acrylic copolymer (B) that is a block copolymer and/or a graft copolymer, wherein
   the (meth)acrylic polymer (A) contains a repeating unit derived from methyl methacrylate in an amount of 50 mass% or more,
   the (meth)acrylic polymer (A) contains a (meth)acrylic polymer (A1) having a mass average molecular weight calibrated with polystyrene of more than 130000 as determined by gel permeation chromatography (GPC) measurement,
   the (meth)acrylic copolymer (B) is a polymer containing a polymer (B1) and a polymer (B2) in a same molecule,
   the polymer (B1) is a polymer containing a unit derived from methyl methacrylate in an amount of 50 mass% or more and having a glass transition temperature of higher than 0°C, and
   the polymer (B2) is a polymer having a glass transition temperature of 0°C or lower.
[16] The method for producing a resin composition according to [15], wherein
   the (meth)acrylic polymer (A) further contains a (meth)acrylic polymer (A2),
   the (meth)acrylic polymer (A2) has a melt flow rate of 7.0 g/10 min or more under conditions of 230°C and 37.3 N in accordance with JIS K7210 or ISO 1133, and
   the (meth)acrylic polymer (A2) is contained in an amount of from 3 to 15 mass% relative to 100 mass% of a total of the resin composition.
[17] The method for producing a resin composition according to [15] or [16], wherein the (meth)acrylic polymer (A1) has a melt flow rate of less than 7.0 g/10 min under conditions of 230°C and 37.3 N in accordance with JIS K7210 or ISO 1133.
[18] The method for producing a resin composition according to any of [15] to [17], wherein the resin composition contains the (meth)acrylic copolymer (B) in an amount of 15 mass% or more relative to 100 mass% of a total of the resin composition.
[19] The method for producing a resin composition according to any of [15] to [18], wherein the (meth)acrylic copolymer (B) has a mass average molecular weight of more than 300000.
[20] The method for producing a resin composition according to any of [15] to [19], wherein the (meth)acrylic copolymer (B) contains a repeating unit derived from a macromonomer (b1) represented by General Formula (1) described below: 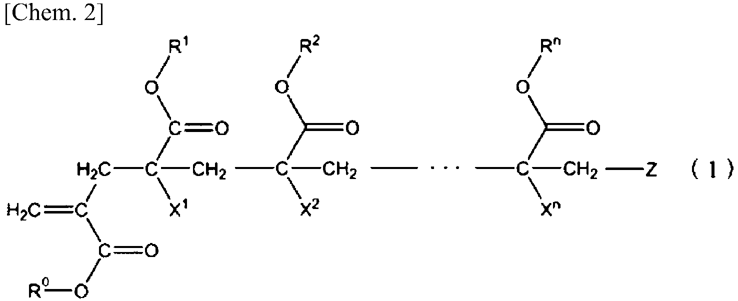 [in Formula (1), R⁰ to Rⁿ are each independently a hydrogen atom, an alkyl group, a cycloalkyl group, an aryl group, or a heterocyclic group; X¹ to Xⁿ are each independently a hydrogen atom or a methyl group; Z is a terminal group; and n is a natural number of from 1 to 10000].
[21] A method for producing a resin molded body, the method including producing a resin composition by the method for producing a resin composition described in any of [15] to [20], and molding a molding material containing the resin composition.

### Advantageous Effects of Invention

The resin composition of the present invention and the molding material of the present invention have excellent moldability and can provide a film having good handleability and further excellent surface smoothness.

The handleability of the film in the present invention is, for example, that a crack hardly propagates in an unintended direction when the film is cut; a blade can run smoothly; it is possible to suppress generation of dust when the film is cut; and the like.

### Description of Embodiments

An embodiment for carrying out the present invention will now be described. The present invention is not limited to the following description. Various modifications can be made within the scope of the gist of the present invention.

In the present invention, "(meth)acryl" means one or both of "acryl" and "methacryl". "(Meth)acrylate" means one or both of "methacrylate" and "acrylate". The same applies to the term "(meth)acryloyl".

In the present invention, "monomer" means an unpolymerized compound (monomer component before polymerization), and "repeating unit" and "structural unit" mean a constituent unit constituting a polymer derived from the monomer formed through polymerization of the monomer.

The constituent unit constituting a polymer is referred to as "monomer unit".

"Repeating unit" or "structural unit" may be a unit directly formed through a polymerization reaction, or may be a unit which is partially converted into another structure by treating a polymer.

In the present invention, "mass%" refers to the content rate of a specific component contained in the total amount of 100 mass%.

Unless otherwise noted, a numerical range represented by "to" in the present specification means a range including the numerical values written before and after "to" as the lower limit value and the upper limit value respectively, and "A to B" means A or more and B or less.

In the present invention, the mass average molecular weight (Mw) of a (meth)acrylic polymer (A) means a mass average molecular weight that is a relative molecular weight calibrated with polystyrene as determined using gel permeation chromatography (GPC). The mass average molecular weight (Mw) of a (meth)acrylic copolymer (B) means a mass average molecular weight that is a relative molecular weight calibrated with polymethyl methacrylate (PMMA) as determined using gel permeation chromatography (GPC).

### Resin Composition

The resin composition of the present invention contains a (meth)acrylic polymer (A) described below and a (meth)acrylic copolymer (B) described below as essential components.

The (meth)acrylic polymer (A) contains a (meth)acrylic polymer (A1) described below as an essential component. Further, the (meth)acrylic polymer (A) preferably contains a (meth)acrylic polymer (A2) described below.

The (meth)acrylic copolymer (B) contains a polymer (B1) and a polymer (B2) described below in the same molecule, and has at least one structure of a block copolymer and a graft copolymer.

Since the resin composition of the present invention contains the (meth)acrylic polymer (A1) as an essential component, handleability of a film obtained by molding the resin composition and the molding material of the present invention can be improved.

Since the resin composition of the present invention contains the (meth)acrylic copolymer (B) as an essential component, the resulting resin composition and molding material have excellent fluidity, and further, the flexibility of a resin molded body or film obtained by molding the resin composition and molding material can be improved.

### (Meth)Acrylic Polymer (A)

The (meth)acrylic polymer (A) is one of the constituent components of the resin composition of the present invention.

The (meth)acrylic polymer (A) is a random copolymer and/or a homopolymer, and contains a (meth)acrylic polymer (A1) described below as an essential component.

The (meth)acrylic polymer (A) contains a repeating unit derived from methyl methacrylate (hereinafter may be referred to as "methyl methacrylate unit") in an amount of 50 mass% or more relative to 100 mass% of the total mass thereof. The (meth)acrylic polymer (A) preferably includes no block structure and/or graft structure.

The methyl methacrylate unit is contained in an amount of preferably 70 mass% or more, more preferably 80 mass% or more, still more preferably 90 mass% or more, particularly preferably 95 mass% or more, relative to 100 mass% of the total mass of the (meth)acrylic polymer (A).

When the lower limit of the content proportion of the methyl methacrylate unit in the (meth)acrylic polymer (A) is 50 mass% or more relative to 100 mass% of the total mass of the (meth)acrylic polymer (A), the heat resistance, hardness, scratch resistance, weather resistance, transparency, and processability of the (meth)acrylic polymer (A) can be favorably maintained. The upper limit of the content proportion of the methyl methacrylate unit is not particularly limited, and the (meth)acrylic polymer (A) may be a homopolymer having 100 mass% of the methyl methacrylate unit.

The (meth)acrylic polymer (A) may contain, in addition to the repeating unit derived from methyl methacrylate, a unit derived from another comonomer copolymerizable with methyl methacrylate (hereinafter may be referred to as "comonomer unit") from the viewpoint that the thermal decomposition resistance can be improved.

In this case, functions of the (meth)acrylic polymer (A), such as the glass transition temperature (Tg), processability, heat resistance, refractive index, weather resistance, releasability, and thermal decomposition resistance can be controlled by adjusting the type and content of the comonomer unit.

The upper limit of the content proportion of the comonomer unit in the (meth)acrylic polymer (A) is 50 mass% or less, preferably 30 mass% or less, more preferably 20 mass% or less, still more preferably 10 mass%, particularly preferably 5 mass% or less, relative to 100 mass% of the total mass of the (meth)acrylic polymer (A) because the performance of the (meth)acrylic polymer (A) such as heat resistance, hardness, scratch resistance, weather resistance, transparency, and processability can be favorably maintained.

The lower limit of the content proportion of the comonomer unit is not particularly limited, and the (meth)acrylic polymer (A) may be a homopolymer not containing the comonomer unit, i.e., a homopolymer of 100 mass% of the methyl methacrylate unit.

Examples of the comonomer forming the comonomer unit of the (meth)acrylic polymer (A) include the following a) to i):
a) (meth)acrylate ester monomers other than methyl methacrylate, such as methyl acrylate, ethyl (meth)acrylate, n-propyl (meth)acrylate, i-propyl (meth)acrylate, n-butyl (meth)acrylate, i-butyl (meth)acrylate, t-butyl (meth)acrylate, 2-ethylhexyl (meth)acrylate, n-lauryl (meth)acrylate, n-stearyl (meth)acrylate, cyclohexyl (meth)acrylate, phenyl (meth)acrylate, benzyl (meth)acrylate, isobornyl (meth)acrylate, 2-methoxyethyl (meth)acrylate, 2-ethoxyethyl (meth)acrylate, and phenoxyethyl (meth)acrylate;
b) hydroxyl group-containing (meth)acrylate monomers such as 2-hydroxyethyl (meth)acrylate, 2-hydroxypropyl (meth)acrylate, 4-hydroxybutyl (meth)acrylate, and glycerol (meth)acrylate;
c) carboxyl group-containing vinyl-based monomers such as (meth)acrylic acid, 2-(meth)acryloyloxyethylhexahydrophthalic acid, 2-(meth)acryloyloxypropylhexahydrophthalic acid, 2-(meth)acryloyloxyethylphthalic acid, 2-(meth) acryloyloxypropylphthalic acid, 2-(meth)acryloyloxyethylmaleic acid, 2-(meth)acryloyloxypropylmaleic acid, 2-(meth)acryloyloxyethylsuccinic acid, 2-(meth)acryloyloxypropylsuccinic acid, crotonic acid, fumaric acid, maleic acid, itaconic acid, monomethyl maleate, and monomethyl itaconate;
d) acid anhydride group-containing vinyl-based monomers such as maleic anhydride and itaconic anhydride;
e) epoxy group-containing vinyl-based monomers such as glycidyl (meth)acrylate, glycidyl α-ethyl acrylate, and 3,4-epoxybutyl (meth)acrylate;
f) vinyl-based monomers based on amino group-containing (meth)acrylates such as dimethylaminoethyl (meth)acrylate and diethylaminoethyl (meth)acrylate;
g) vinyl-based monomers containing amide groups, such as (meth)acrylamide, N-t-butyl (meth)acrylamide, N-methylol (meth)acrylamide, N-methoxymethyl (meth)acrylamide, N-butoxymethyl (meth)acrylamide, diacetone acrylamide, maleic acid amide, and maleimide;
h) vinyl-based monomers such as styrene, α-methylstyrene, vinyltoluene, (meth)acrylonitrile, vinyl chloride, vinyl acetate, and vinyl propionate;
i) polyfunctional vinyl-based monomers such as divinylbenzene, ethylene glycol di(meth)acrylate, 1,3-butylene glycol di(meth)acrylate, 1,6-hexanediol di(meth)acrylate, triethylene glycol di(meth)acrylate, tetraethylene glycol di(meth)acrylate, tripropylene glycol di(meth)acrylate, trimethylolpropane tri(meth)acrylate, allyl (meth)acrylate, and N,N'-methylenebis(meth)acrylamide.

One type of these may be used alone or two or more types of these may be used in combination.

Among these, methyl acrylate, ethyl (meth)acrylate, n-butyl (meth)acrylate, and 2-ethylhexyl (meth)acrylate are preferable, and methyl acrylate is more preferable from the viewpoint of availability of the monomers.

The mass average molecular weight (Mw) of the (meth)acrylic polymer (A) calibrated with polystyrene in the present invention determined by gel permeation chromatography (GPC) measurement is not particularly limited, and it is preferably 50000 or more and 300000 or less, more preferably 70000 or more and 200000 or less, still more preferably 80000 or more and 160000 or less. When the lower limit of Mw of the (meth)acrylic polymer (A) is 50000 or more, the performance of the (meth)acrylic polymer (A) such as heat resistance, hardness, scratch resistance, weather resistance, and transparency is likely to be exhibited. When the upper limit of the Mw of the (meth)acrylic polymer (A) is 300000 or less, the melt viscosity falls within an appropriate range, and melt-kneadability and processability are improved.

The content proportion of the (meth)acrylic polymer (A) is preferably 25 mass% or more, more preferably 30 mass% or more, still more preferably 35 mass% or more relative to the total of 100 mass% of the resin composition of the present invention. When the content proportion of the (meth)acrylic polymer (A) is 25 mass% or more, functions such as heat resistance, weather resistance, and transparency, which are characteristics of the (meth)acrylic polymer (A), can be effectively imparted. The content proportion of the (meth)acrylic polymer (A) is preferably 85 mass% or less, more preferably 80 mass% or less, still more preferably 75 mass% or less, relative to 100 mass% of the total of the resin composition of the present invention. When the content proportion of the (meth)acrylic polymer (A) is 90 mass% or less, the content proportion of the (meth)acrylic copolymer (B) relatively increases, and thus, a molding material having excellent moldability, a film having excellent handleability, and the like are likely to be obtained.

### (Meth)acrylic Polymer (A1)

The (meth)acrylic polymer (A1) is used as an essential component in the resin composition of the present invention.

The (meth)acrylic polymer (A1) is contained in the (meth)acrylic polymer (A), and has a mass average molecular weight calibrated with polystyrene of more than 130000 as determined by gel permeation chromatography (GPC) measurement.

To satisfy the above-described mass average molecular weight condition, the (meth)acrylic polymer (A1) preferably has a melt flow rate (MFR) of less than 7.0 g/10 min, more preferably 4.0 g/10 min or less, still more preferably 2.0 g/10 min or less, particularly preferably 1.0 g/10 min or less under conditions of 230°C and 37.3 N in accordance with JIS K7210 or ISO 1133.

The lower limit of the MFR of the (meth)acrylic polymer (A1) is not particularly limited, but is usually 0.1 g/10 min or more.

The inclusion of the (meth)acrylic polymer (A1) makes it possible to obtain the effect of improving the handleability of a molding material containing the resin composition of the present invention and a film obtained by molding the molding material.

As described above, examples of the handleability of the film include that cracks are less likely to propagate in an unintended direction when the film is cut, and a blade can run smoothly. In addition, suppression of dust generation when the film is cut can be exemplified.

The monomer unit constituting the (meth)acrylic polymer (A1) and the suitable content proportion thereof are the same as those of the (meth)acrylic polymer (A) described above.

The mass average molecular weight (Mw) of the (meth)acrylic polymer (A1) calibrated with polystyrene as determined by gel permeation chromatography (GPC) measurement is more than 130000, preferably 135000 or more, more preferably 140000 or more, still more preferably 145000 or more. When the Mw of the (meth)acrylic polymer (A1) exceeds 130000, the handleability of the resulting film is improved. The mass average molecular weight (Mw) of the (meth)acrylic polymer (A1) calibrated with polystyrene as determined by gel permeation chromatography (GPC) measurement is preferably 300000 or less, more preferably 200000 or less, still more preferably 180000 or less. When the Mw of the (meth)acrylic polymer (A1) is 300000 or less, moldability is improved.

The content proportion of the (meth)acrylic polymer (A1) is preferably 10 mass% or more, more preferably 30 mass% or more, still more preferably 50 mass% or more, particularly preferably 60 mass% or more, relative to 100 mass% of the total of the resin composition of the present invention. When the content proportion of the (meth)acrylic polymer (A1) is 10 mass% or more relative to 100 mass% of the total of the resin composition of the present invention, the handleability of the resulting film is improved. The content proportion of the (meth)acrylic polymer (A1) is preferably 90 mass% or less, more preferably 80 mass% or less, still more preferably 70 mass% or less, relative to 100 mass% of the total of the resin composition of the present invention. When the content proportion of the (meth)acrylic polymer (A1) is 90 mass% or less relative to 100 mass% of the total of the resin composition of the present invention, moldability is improved.

The content proportion of the (meth)acrylic polymer (A1) is preferably 50 mass% or more, more preferably 65 mass% or more, still more preferably 80 mass% or more, relative to 100 mass% of the total of the (meth)acrylic polymer (A). When the content proportion of the (meth)acrylic polymer (A1) is 50 mass% or more relative to 100 mass% of the total of the (meth)acrylic polymer (A), the handleability of the resulting film is improved. The content proportion of the (meth)acrylic polymer (A1) may be 100 mass% relative to 100 mass% of the total of the (meth)acrylic polymer (A). That is, the (meth)acrylic polymer (A) may be composed only of the (meth)acrylic polymer (A1).

### (Meth)Acrylic Polymer (A2)

The (meth)acrylic polymer (A2) is a component contained in the resin composition of the present invention as necessary.

The (meth)acrylic polymer (A2) is included in the (meth)acrylic polymer (A).

The function of the (meth)acrylic polymer (A2) is to adjust fluidity during melt molding of the resin composition of the present invention. Specifically, it has a role of adjusting the relaxation time when the molten resin is extruded from a die in the molding of the extruded film and improving the smoothness of the surface of the film to be cooled and solidified. That is, when an appropriate amount of the (meth)acrylic polymer (A2) is used, the surface smoothness of the film can be improved to suppress the haze to a low level, molding defects can be prevented, and good appearance quality can be imparted.

From the viewpoint of improving the surface smoothness of the film to obtain the effect of suppressing the haze to a low level, the (meth)acrylic polymer (A2) has a melt flow rate (MFR) of preferably 7.0 g/10 min or more, more preferably 10.0 g/10 min, still more preferably 12.0 g/10 min as measured under the conditions of 230°C and 37.3 N in accordance with JIS K7210 or ISO 1133.

The upper limit of the MFR of the (meth)acrylic polymer (A2) is not particularly limited, but is usually 30 g/10 minutes or less.

The mass average molecular weight (Mw) of the (meth)acrylic polymer (A2) calibrated with polystyrene as determined by gel permeation chromatography (GPC) measurement is preferably 50000 or more and 200000 or less, more preferably 70000 or more and 150000 or less, still more preferably 80000 or more and 120000 or less. When the lower limit of the Mw of the (meth)acrylic polymer (A2) is 50000 or more, the performance of the (meth)acrylic polymer (A) such as heat resistance, hardness, scratch resistance, weather resistance, and transparency is likely to be exhibited. When the upper limit of the Mw of the (meth)acrylic polymer (A2) is 200000 or less, the melt viscosity and the relaxation time are within appropriate ranges, and the melt-kneadability, the processability, and the surface smoothness of the resulting film are improved.

The monomer unit constituting the (meth)acrylic polymer (A2) is the same as that of the (meth)acrylic polymer (A) described above. The (meth)acrylic polymer (A2) preferably contains the comonomer unit described above in an amount of 2 mass% or more and 20 mass% or less, more preferably 5 mass% or more and 18 mass% or less, still more preferably 10 mass% or more and 15 mass% or less.

When the (meth)acrylic polymer (A2) contains the comonomer unit within the above range, the melt flow rate of the (meth)acrylic polymer (A2) is likely to be achieved.

When the (meth)acrylic polymer (A) contains the (meth)acrylic polymer (A2), the content proportion of the (meth)acrylic polymer (A2) in 100 mass% of the resin composition of the present invention is preferably 1 mass% or more and 20 mass% or less, more preferably 2 mass% or more and 15 mass% or less, still more preferably 3 mass% or more and 15 mass% or less, particularly preferably 3 mass% or more and 12 mass% or less. When the content proportion of the (meth)acrylic polymer (A2) is set to 1 mass% or more, the effects of suppressing the haze and suppressing molding defects of the resulting film are likely to be obtained. When the content proportion of the (meth)acrylic polymer (A2) is set to 20 mass% or less, degradation of mechanical properties such as heat resistance and impact resistance of the resin composition can be prevented.

### (Meth)Acrylic Copolymer (B)

The resin composition of the present invention contains a (meth)acrylic copolymer (B).

The (meth)acrylic copolymer (B) is a block copolymer and/or a graft copolymer containing a polymer (B 1) and a polymer (B2) described below in the same molecule, and has a structure of at least one of the block copolymer and the graft copolymer.

The block and/or graft structure, which is the structure of the (meth)acrylic copolymer (B), may be any structure such as diblock, triblock, multiblock, graft, cyclic, star-shaped, comb-shaped, dendritic, or ladder structure, or may be a structure in which a plurality of these structures are combined. Among these structures, the (meth)acrylic copolymer (B) preferably contains at least any one of diblock, triblock, and graft structures because flexibility is expected to be imparted and production is relatively easy.

In the (meth)acrylic copolymer (B), the polymer (B1) has a function of imparting miscibility and compatibility to the (meth)acrylic polymer (A) and a function of enabling the (meth)acrylic copolymer (B) to be handled as a solid.

In the (meth)acrylic copolymer (B), the polymer (B2) has a function of imparting flexibility, impact resistance, and moldability.

For example, the (meth)acrylic copolymer (B) may be a graft copolymer in which the main chain is composed of the polymer (B1), and a graft chain composed of the polymer (B2) is branched and linked to the main chain composed of the polymer (B1). Conversely, the main chain may be the polymer (B2) and the side chain may be the polymer (B 1). The (meth)acrylic copolymer (B) may be a block copolymer in which a polymer composed of the polymer (B1) and a polymer composed of the polymer (B2) are linked in series. Further, the (meth)acrylic copolymer (B) may have a structure in which the main chain and/or side chain of the graft copolymer includes a block copolymer.

The lower limit of the mass average molecular weight (Mw) of the (meth)acrylic copolymer (B) is preferably more than 120000, more preferably more than 300000, still more preferably 500000 or more, particularly preferably 700000 or more. When the Mw of the (meth)acrylic copolymer (B) is more than 120000, the flexibility and impact resistance of the resin composition, the molding material, and the molded body are improved.

The upper limit of the mass average molecular weight (Mw) of the (meth)acrylic copolymer (B) is preferably 5000000 or less, more preferably 3500000 or less, still more preferably 2000000 or less. When the Mw of the (meth)acrylic copolymer (B) is 5000000 or less, the transparency of the resin composition, the molding material, and the resulting film is improved.

In the present invention, the mass average molecular weight (Mw) of the (meth)acrylic copolymer (B) means a mass average molecular weight that is a relative molecular weight calibrated with polymethyl methacrylate (PMMA) as determined using gel permeation chromatography (GPC).

The content proportion of the (meth)acrylic copolymer (B) is preferably 15 mass% or more, more preferably 20 mass% or more, still more preferably 30 mass% or more, relative to 100 mass% of the total of the resin composition of the present invention. When the content proportion of the (meth)acrylic copolymer (B) is 15 mass% or more, the fluidity of a molding material and the handleability of a film, which are characteristics of the (meth)acrylic copolymer (B), are likely to be imparted.

The content proportion of the (meth)acrylic copolymer (B) is preferably 70 mass% or less, more preferably 60 mass% or less, still more preferably 50 mass% or less, relative to 100 mass% of the total of the resin composition of the present invention. When the content proportion of the (meth)acrylic copolymer (B) is 70 mass% or less, the effect of the (meth)acrylic polymer (A) is likely to be obtained, and a film having good heat resistance, surface hardness, transparency, and the like is obtained.

### Polymer (B1)

The polymer (B1) is a polymer containing 50 mass% or more of a methyl methacrylate unit and having a glass transition temperature of higher than 0°C.

By using the same comonomer unit as that of the (meth)acrylic polymer (A) described above for the polymer (B1), miscibility and compatibility with the (meth)acrylic polymer (A), which are functions of the polymer (B1), can be effectively exhibited.

The polymer (B1) preferably contains 70 mass% or more, more preferably 80 mass% or more, still more preferably 90 mass% or more, particularly preferably 95 mass% or more of a methyl methacrylate unit relative to 100 mass% of the total mass thereof.

When the lower limit of the content proportion of the methyl methacrylate unit in the polymer (B1) is 70 mass% or more, particularly 80 mass% or more, relative to 100 mass% of the total mass of the polymer (B1), the polymer (B1) has good affinity for the (meth)acrylic polymer (A), and miscibility and compatibility are improved.

The upper limit of the content proportion of the methyl methacrylate unit in the polymer (B1) is not particularly limited, and the polymer (B1) may be a homopolymer of 100 mass% of methyl methacrylate.

The polymer (B1) may contain, in addition to the methyl methacrylate unit, an additional comonomer unit copolymerizable with methyl methacrylate according to the purpose of the (meth)acrylic copolymer (B).

For example, when the polymer (B1) contains an acrylate unit as a comonomer unit, depolymerization of the polymer (B1) can be suppressed when the polymer is exposed to a high temperature condition such as melt molding, and the thermal decomposition resistance is improved.

By adjusting the type and content of the comonomer unit, functions such as the glass transition temperature (Tg), processability, heat resistance, refractive index, weather resistance, releasability, and thermal decomposition resistance of the polymer (B1) can be controlled.

The upper limit of the content proportion of the comonomer unit in the polymer (B1) is preferably 20 mass% or less relative to 100 mass% of the total mass of the polymer (B1) because performance such as heat resistance, hardness, scratch resistance, weather resistance, transparency, or processability can be favorably maintained. The lower limit of the content proportion of the comonomer unit in the polymer (B1) is not particularly limited, and the polymer (B1) may contain no comonomer unit, i.e., may be a homopolymer of methyl methacrylate.

Examples of the comonomer forming the comonomer unit of the polymer (B1) include the comonomers a) to i) described above as the comonomers forming the comonomer unit of the (meth)acrylic polymer (A). One type of these may be used alone or two or more types of these may be used in combination.

As the comonomer of the comonomer unit contained in the polymer (B1), from the viewpoint of availability of the monomers, methyl acrylate, ethyl (meth)acrylate, n-butyl (meth)acrylate, and 2-ethylhexyl (meth)acrylate are preferable, and methyl acrylate is more preferable.

The polymer (B1) preferably contains a constituent unit derived from a macromonomer (b1) described below. In this case, the methyl methacrylate unit may be contained in the macromonomer (b1).

The glass transition temperature (Tg) of the polymer (B1) is higher than 0°C, preferably 50°C or higher, more preferably 90°C or higher, still more preferably 100°C or higher. When the glass transition temperature (Tg) of the polymer (B1) is higher than 0°C, effects such as improvement in handleability of the (meth)acrylic copolymer (B) and improvement in heat resistance of the resin composition, molded body, and film of the present invention can be expected. The upper limit of the glass transition temperature (Tg) of the polymer (B1) is not particularly limited, but it is usually 130°C or lower from the viewpoint of availability.

In the present invention, the Tg of the polymer (B1) can be calculated by employing a numerical value described in a known document such as POLYMER HANDBOOK FOURTH EDITION 2003 as the Tg of a homopolymer of a monomer which is a constituent unit of the polymer (B1) and using the Fox equation. Alternatively, the dynamic viscoelasticity of the resultant resin molded body can be measured, and the value of tanδ can be employed as Tg.

The lower limit of the mass average molecular weight (Mw) of the polymer (B1) is preferably 3000 or more, more preferably 10000 or more, still more preferably 15000 or more, particularly preferably 20000 or more. When the Mw of the polymer (B1) is 3000 or more, the polymer (B1) has favorable affinity with the (meth)acrylic polymer (A), and miscibility and compatibility can be expected to be imparted.

The upper limit of the mass average molecular weight (Mw) of the polymer (B1) is preferably 1000000 or less, more preferably 80000 or less, still more preferably 60000 or less, particularly preferably 40000 or less. When the Mw of the polymer (B1) is 1000000 or less, the melt viscosity falls within an appropriate range.

In the present invention, the mass average molecular weight (Mw) of the polymer (B1) means a mass average molecular weight that is a relative molecular weight calibrated with polymethyl methacrylate (PMMA) as determined using gel permeation chromatography (GPC).

The polymer (B1) may be a mixture of two or more polymers. In such a case, the mass average molecular weight (Mw) is calculated as a value of the polymer (B1) as a whole. When a plurality of types of polymers (B1) having different mass average molecular weights (Mw) are used in combination, the polymer (B1) having a lower molecular weight plays a role of reducing the syrup viscosity and preventing the copolymer from being crosslinked, and the polymer (B1) having a larger molecular weight plays a role of securing compatibility with the matrix resin when used as an additive.

The content proportion of the polymer (B1) contained in the (meth)acrylic copolymer (B) is preferably 35 mass% or more and 75 mass% or less relative to 100 mass% of the total mass of the (meth)acrylic copolymer (B). When the lower limit of the content proportion of the polymer (B1) is 35 mass% or more, the (meth)acrylic copolymer (B) having excellent miscibility and compatibility with the (meth)acrylic polymer (A) is likely to be achieved. The lower limit of the content proportion of the polymer (B1) is preferably 40 mass% or more, more preferably 45 mass% or more, still more preferably 50 mass% or more. When the upper limit of the content proportion of the polymer (B1) is 75 mass% or less, the effect of imparting flexibility by the polymer (B2) is likely to be obtained. The upper limit of the content proportion of the polymer (B1) is preferably 70 mass% or less, more preferably 65 mass% or less.

### Polymer (B2)

The polymer (B2) imparts functions such as film flexibility, impact resistance, and improvement of fluidity during melt molding to the (meth)acrylic copolymer (B) and the resin composition, molding material, and resin molded body of the present invention using the copolymer.

The glass transition temperature (Tg) of the polymer (B2) is 0°C or lower, preferably - 10°C or lower, more preferably -20°C or lower, still more preferably -35°C or lower. When the glass transition temperature (Tg) of the polymer (B2) is 0°C or lower, effects such as flexibility, impact resistance, and improvement of fluidity during melt molding can be expected. The lower limit of the glass transition temperature (Tg) of the polymer (B2) is not particularly limited, but it is usually -70°C or higher from the viewpoint of availability.

In the present invention, the Tg of the polymer (B2) can be calculated by employing a numerical value described in a known document such as POLYMER HANDBOOK FOURTH EDITION 2003 as the Tg of a homopolymer of a monomer which is a constituent unit of the polymer (B2) and using the Fox equation. Alternatively, the dynamic viscoelasticity of the resultant resin molded body can be measured, and the value of tanδ can be employed as Tg.

The content proportion of the polymer (B2) contained in the (meth)acrylic copolymer (B) is preferably 25 mass% or more and 65 mass% or less relative to the total mass of 100 mass% of the (meth)acrylic copolymer (B). When the lower limit of the content proportion of the polymer (B2) is 25 mass% or more, the effect of improving flexibility, impact resistance, and moldability by the (meth)acrylic copolymer (B) is likely to be obtained. The lower limit of the content proportion of the polymer (B2) is preferably 25 mass% or more, more preferably 30 mass% or more, still more preferably 35 mass% or more. When the upper limit of the content proportion of the polymer (B2) is 65 mass% or less, the handleability of the (meth)acrylic copolymer (B) is improved. The upper limit of the content proportion of the polymer (B2) is preferably 65 mass% or less, more preferably 60 mass% or less, still more preferably 55 mass% or less, particularly preferably 50 mass% or less, most preferably 45 mass% or less.

The refractive index of the polymer (B2) is preferably set so that the difference in refractive index between the polymer (B2) and the polymer (B1) or the (meth)acrylic polymer (A) is small. This improves the transparency of the resin composition, molding material, and molded body of the present invention. The difference in refractive index between the polymer (B2) and the polymer (B1) is preferably 0.1 or less, more preferably 0.05 or less, still more preferably 0.02 or less. Similarly, the difference in refractive index between the polymer (B2) and the (meth)acrylic polymer (A) is preferably 0.1 or less, more preferably 0.05 or less, still more preferably 0.02 or less.

The mass average molecular weight (Mw) of the polymer (B2) is preferably 3000 or more, more preferably 10000 or more, still more preferably 15000 or more, particularly preferably 20000 or more. When the Mw of the polymer (B2) is 3000 or more, favorable impact resistance is achieved. The mass average molecular weight (Mw) of the polymer (B2) is preferably 2500000 or less, more preferably 2000000 or less, still more preferably 1500000 or less, particularly preferably 1000000 or less. When the Mw of the polymer (B2) is 2500000 or less, the transparency of the resin composition, molding material, and film of the present invention is improved.

The mass average molecular weight (Mw) of the polymer (B2) can be calculated from the mass average molecular weight (Mw) of the entire (meth)acrylic copolymer (B) and the weight ratio between the polymer (B1) and the polymer (B2). The weight ratio between the polymer (B1) and the polymer (B2) can be determined by a method such as ¹H-NMR. For example, when the mass average molecular weight (Mw) of the (meth)acrylic copolymer (B) is 100000, and the proportion of the polymer (B2) to 100 mass% of the total of the (meth)acrylic copolymer (B) is 40 mass%, the mass average molecular weight (Mw) of the polymer (B2) can be calculated as 100000 × 0.4 = 400000.

### Monomer (b2)

The monomer (b2) is a monomer used as a raw material of the polymer (B2). The monomer (b2) is not particularly limited as long as the (meth)acrylic copolymer (B) can be produced, and various polymerizable monomers can be used as necessary. Specifically, it is preferable to mainly use acrylate or aromatic vinyl from the viewpoint of imparting flexibility, impact resistance, and moldability by setting the glass transition temperature (Tg) low, and of adjusting the refractive index. An additional monomer can be used as necessary.

The amount of the acrylate used for the monomer (b2) is preferably 70 mass% or more, more preferably 79 mass% or more, still more preferably 81 mass% or more relative to the total mass of 100 mass% of the monomer (b2). When the lower limit of the content proportion of the acrylate is 70 mass% or more, the effect of improving flexibility, impact resistance, and moldability is given to the (meth)acrylic copolymer (B). When the content proportion of the acrylate in the monomer (b2) is small, the effect of improving flexibility, impact resistance, and moldability may be insufficient.

The upper limit of the content proportion of the acrylate contained in the monomer (b2) is not particularly limited, but is preferably less than 100 mass%, more preferably 95 mass% or less, still more preferably 90 mass% or less, relative to 100 mass% of the total mass of the monomer (b2).

The glass transition temperature (Tg) of the homopolymer of the acrylate is preferably 0°C or lower because the acrylate can make the resultant resin molded body more excellent in impact resistance.

In the present invention, the Tg of the homopolymer of the acrylate can be calculated by employing a numerical value described in a known document such as POLYMER HANDBOOK FOURTH EDITION 2003 and using the Fox equation.

Examples of the acrylate used for the monomer (b2) include acrylates such as methyl acrylate, ethyl acrylate, n-propyl acrylate, i-propyl acrylate, n-butyl acrylate, i-butyl acrylate, t-butyl acrylate, 2-ethylhexyl acrylate, n-lauryl acrylate, n-stearyl acrylate, cyclohexyl acrylate, phenyl acrylate, benzyl acrylate, isobornyl acrylate, 2-methoxyethyl acrylate, 2-ethoxyethyl acrylate, and phenoxyethyl acrylate; hydroxyl group-containing acrylates such as 2-hydroxyethyl acrylate, 2-hydroxypropyl acrylate, 4-hydroxybutyl acrylate, and glycerol acrylate; carboxy group-containing acrylates such as 2-acryloyloxyethylhexahydrophthalic acid, 2-acryloyloxypropylhexahydrophthalic acid, 2-acryloyloxyethylphthalic acid, 2-acryloyloxypropylphthalic acid, 2-acryloyloxyethylmaleic acid, 2-acryloyloxypropylmaleic acid, 2-acryloyloxyethylsuccinic acid, and 2-acryloyloxypropylsuccinic acid; epoxy group-containing acrylates such as glycidyl acrylate, glycidyl α-ethyl acrylate, and 3,4-epoxy butyl acrylate; amino group-containing acrylates such as dimethylaminoethyl acrylate and diethylaminoethyl acrylate; and polyfunctional acrylates such as ethylene glycol diacrylate, 1,3-butylene glycol diacrylate, 1,6-hexanediol diacrylate, triethylene glycol diacrylate, tetraethylene glycol diacrylate, tripropylene glycol diacrylate, trimethylolpropane triacrylate, allyl acrylate, and N,N'-methylenebisacrylamide. One of these may be used alone, or two or more types of these may be used in combination.

Among the monomers described above, 2-ethylhexyl acrylate, 4-hydroxybutyl acrylate, n-butyl acrylate, n-propyl acrylate, ethyl acrylate, and 2-hydroxyethyl acrylate are preferable because the Tg of the homopolymer of these monomers is 0°C or lower. Further, methyl acrylate, ethyl acrylate, and n-butyl acrylate are preferable because they are easily available.

The aromatic vinyl that can be used for the monomer (b2) is used for the purpose of adjusting the refractive index of the polymer (B2) and adjusting the polymerization rate when the polymer (B2) and the (meth)acrylic copolymer (B) are produced.

The content proportion of the aromatic vinyl used in the monomer (b2) is preferably from 10 to 30 mass%, more preferably from 13 to 21 mass%, still more preferably from 15 to 19 mass%, relative to 100 mass% of the total mass of the monomer (b2). When the content proportion of the aromatic vinyl contained in the monomer (b2) is 10 mass% or more, the resin composition, molding material, and molded body of the present invention can exhibit favorable transparency. When the content proportion of the aromatic vinyl contained in the monomer (b2) is 30 mass% or less, the polymerization reaction rate in producing the (meth)acrylic copolymer (B) is sufficiently high.

Examples of the aromatic vinyl include styrene, α-methylstyrene, o-methylstyrene, p-methylstyrene, o-ethylstyrene, p-ethylstyrene and p-t-butylstyrene, vinylethylbenzene, vinyltoluene, vinylxylene, vinylnaphthalene, diphenylethylene, and divinylbenzene. Among these, styrene is preferable from the viewpoint of practical physical properties and productivity. One of these may be used alone, or two or more types of these may be used in combination.

The monomer (b2) may contain an additional monomer copolymerizable with the acrylate and the aromatic vinyl as necessary.

Examples of the additional monomer include methacrylates such as methyl methacrylate, ethyl methacrylate, n-propyl methacrylate, i-propyl methacrylate, n-butyl methacrylate, i-butyl methacrylate, t-butyl methacrylate, 2-ethylhexyl methacrylate, n-lauryl methacrylate, n-stearyl methacrylate, cyclohexyl methacrylate, phenyl methacrylate, benzyl methacrylate, isobornyl methacrylate, 2-methoxyethyl methacrylate, 2-ethoxyethyl methacrylate, and phenoxyethyl methacrylate; hydroxyl group-containing methacrylates such as 2-hydroxyethyl methacrylate, 2-hydroxypropyl methacrylate, 4-hydroxybutyl methacrylate, and glycerol methacrylate; carboxy group-containing methacrylates such as 2-methacryloyloxyethylhexahydrophthalic acid, 2-methacryloyloxypropylhexahydrophthalic acid, 2-methacryloyloxyethylphthalic acid, 2-methacryloyloxypropylphthalic acid, 2-methacryloyloxyethylmaleic acid, 2-methacryloyloxypropylmaleic acid, 2-methacryloyloxyethylsuccinic acid, and 2-methacryloyloxypropylsuccinic acid; epoxy group-containing methacrylates such as glycidyl methacrylate and 3,4-epoxybutyl methacrylate; amino group-containing methacrylates such as dimethylaminoethyl methacrylate and diethylaminoethyl methacrylate; and polyfunctional methacrylates such as ethylene glycol dimethacrylate, 1,3-butylene glycol dimethacrylate, 1,6-hexanediol dimethacrylate, triethylene glycol dimethacrylate, tetraethylene glycol dimethacrylate, tripropylene glycol dimethacrylate, trimethylolpropane trimethacrylate, and allyl methacrylate. One or more types of these can be appropriately selected and used.

Examples of the additional monomer further include carboxy group-containing vinyl-based monomers such as (meth)acrylic acid, crotonic acid, fumaric acid, maleic acid, itaconic acid, monomethyl maleate, and monomethyl itaconate; acid anhydride group-containing vinyl-based monomers such as maleic anhydride and itaconic anhydride; vinyl-based monomers containing amide groups such as (meth)acrylamide, N-t-butyl (meth)acrylamide, N-methylol (meth)acrylamide, N-methoxymethyl (meth)acrylamide, N-butoxymethyl (meth)acrylamide, diacetone acrylamide, maleic acid amide, and maleimide; and vinyl-based monomers such as (meta)acrylonitrile, vinyl chloride, vinyl acetate, and vinyl propionate.

When an additional monomer is used, the amount thereof used is preferably 20 mass% or less, more preferably 10 mass% or less, still more preferably 5 mass% or less, relative to 100 mass% of the total of the monomer (b2). The additional monomer does not have to be used.

### Method for Producing (Meth)Acrylic Copolymer (B)

Examples of the method for producing the (meth)acrylic copolymer (B) according to the present invention include a living polymerization method and a method using the macromonomer (b1) described below. Examples of the living polymerization method include a living radical polymerization method and a living anion polymerization method. Examples of the living radical polymerization method include reversible addition fragmentation chain transfer polymerization (RAFT), atom transfer radical polymerization (ATRP), nitroxide-mediated polymerization (NMP), and living radical polymerization (TERP) using organic tellurium as a growth terminal. The method using the macromonomer (b1) is advantageous in that the (meth)acrylic copolymer (B) can be produced relatively easily. The method using the macromonomer (b1) is preferable because there is an advantage that it is not necessary to remove residues of a catalyst and an auxiliary agent required in the living polymerization method or to perform a terminal treatment step.

### Method for Producing (Meth)Acrylic Copolymer (B) Using Macromonomer

In a method for producing the (meth)acrylic copolymer (B) using the macromonomer, the macromonomer may be used as either a raw material of the polymer (B1) or a raw material of the polymer (B2). A macromonomer copolymer is obtained by copolymerizing the macromonomer with a comonomer copolymerizable with the macromonomer. This macromonomer copolymer is used as the (meth)acrylic copolymer (B).

Here, as an example, a method for producing a macromonomer copolymer by using the macromonomer (b1) as a raw material of the polymer (B1) and copolymerizing the macromonomer (b1) with the monomer (b2) will be described. In this case, the polymer (B2) has the monomer (b2) as a monomer unit.

### Method for Producing Macromonomer (b1)

The macromonomer (b1) can be produced by a known method. Examples of the method for producing a macromonomer include a method for producing a macromonomer using a cobalt chain transfer agent (US 4680352), a method using an α-substituted unsaturated compound such as α-bromomethylstyrene as a chain transfer agent (WO 88/04304), a method for chemically bonding a polymerizable group (JP S60-133007 A, US 5147952, and JP H06-298921 A), and a method using thermal decomposition (JP H11-240854 A). Among these, as the method for producing the macromonomer (b1), a method for producing the macromonomer (b1) using a cobalt chain transfer agent is preferable from the viewpoints of a small number of production steps and using a catalyst having a high chain transfer constant.

Examples of the method for producing the macromonomer (b1) using a cobalt chain transfer agent include a mass polymerization method, a solution polymerization method, and aqueous dispersion polymerization methods such as a suspension polymerization method and an emulsion polymerization method. Among these, an aqueous dispersion polymerization method is preferable from the viewpoint of simplifying the step of recovering the macromonomer (b1).

As the cobalt chain transfer agent used in the present invention, a cobalt chain transfer agent represented by General Formula (2) described below can be used. As the cobalt chain transfer agent, those described in, for example, JP 3587530 B, JP H06-23209 A, JP H07-35411 A, US 4526945, US 4694054, US 4834326, US 4886861, US 5324879, WO 95/17435, and JP H09-510499 T can be used. 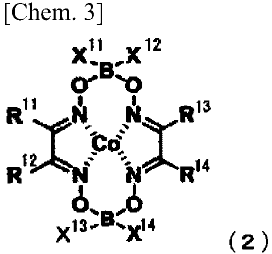 [In the formula, R¹¹ to R¹⁴ are each independently an alkyl group, a cycloalkyl group, or an aryl group; and X¹¹ to X¹⁴ are each independently an F atom, a Cl atom, a Br atom, an OH group, an alkoxy group, an aryloxy group, an alkyl group, or an aryl group.]

Specific examples of the cobalt chain transfer agent include bis(boron difluorodimethyldioxyiminocyclohexane) cobalt(II), bis(boron difluorodimethylglyoxymate) cobalt(II), bis(boron difluorodiphenylglyoxymate) cobalt(II), a cobalt(II) complex of a vicinaliminohydroxyimino compound, a cobalt(II) complex of tetraazatetraalkylcyclotetradecatetraene, an N,N'-bis(salicylidene)ethylenediaminocobalt(II) complex, a cobalt(II) complex of dialkyldiazadioxodialkyldodecadiene, and a cobalt(II) porphyrin complex. Among these, bis(boron difluorodiphenylglyoxymate) cobalt(II) (R¹¹ to R¹⁴: phenyl group, X¹¹ to X¹⁴: F atom), which is stably present in an aqueous medium and has a high chain transfer effect, is preferable. One or more types of these can be appropriately selected and used.

The amount of the cobalt chain transfer agent used is preferably from 5 to 350 ppm relative to the monomer for obtaining the macromonomer (b1). When the amount of the cobalt chain transfer agent used is 5 ppm or more, the reduction in molecular weight tends to be sufficient. When the amount of the cobalt chain transfer agent used is 350 ppm or less, the resulting macromonomer (b1) is hardly colored.

The lower limit of the mass average molecular weight (Mw) of the macromonomer (b1) is preferably 3000 or more, more preferably 10000 or more, still more preferably 15000 or more, particularly preferably 20000 or more. When the Mw of the macromonomer (b1) is 3000 or more, the affinity of the polymer (B1) derived from the macromonomer (b1) for the (meth)acrylic polymer (A) is improved, and miscibility and compatibility can be expected to be imparted.

The upper limit of the mass average molecular weight (Mw) of the macromonomer (b1) is preferably 1000000 or less, more preferably 80000 or less, still more preferably 60000 or less, particularly preferably 40000 or less. When the Mw of the macromonomer (b1) is 1000000 or less, the melt viscosity of the (meth)acrylic copolymer (B) falls within an appropriate range.

In the present invention, the mass average molecular weight (Mw) of the macromonomer (b1) means a mass average molecular weight that is a relative molecular weight calibrated with polymethyl methacrylate (PMMA) as determined using gel permeation chromatography (GPC).

Examples of the solvent used in producing the macromonomer (b1) by a solution polymerization method include hydrocarbons such as toluene; ethers such as diethyl ether and tetrahydrofuran; halogenated hydrocarbons such as dichloromethane and chloroform; ketones such as acetone; alcohols such as methanol; nitriles such as acetonitrile; esters such as ethyl acetate; carbonates such as ethylene carbonate; and supercritical carbon dioxide. One of these may be used alone, or two or more types of these may be used in combination.

### Method for Producing Macromonomer Copolymer

The method for producing a macromonomer copolymer includes a step of polymerizing a polymerizable mixture containing a polymerizable composition (X) and a polymerization initiator described below.

The polymerizable composition (X) contains the macromonomer (b1) represented by General Formula (1) described below and a comonomer copolymerizable with the macromonomer (b1). As the comonomer, a comonomer copolymerizable with the macromonomer (b1) is appropriately selected from the monomers (b2) and used. 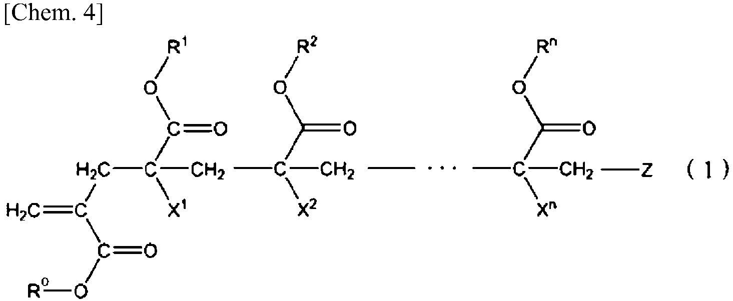 [In Formula (1), R⁰ to Rⁿ are each independently a hydrogen atom, an alkyl group, a cycloalkyl group, an aryl group, or a heterocyclic group; X¹ to Xⁿ are each independently a hydrogen atom or a methyl group; Z is a terminal group; and n is a natural number of from 1 to 10000.]

### R⁰ to Rⁿ

In Formula (1), the alkyl group, cycloalkyl group, aryl group, or heterocyclic group of R⁰ to Rⁿ may have a substituent.

Examples of the alkyl group of R⁰ to Rⁿ include a branched or linear alkyl group having 1 to 20 carbons. Specific examples include a methyl group, an ethyl group, an n-propyl group, an i-propyl group, an n-butyl group, an i-butyl group, a t-butyl group, a pentyl group, a hexyl group, a heptyl group, an octyl group, a nonyl group, a decyl group, an undecyl group, a dodecyl group, a tridecyl group, a tetradecyl group, a pentadecyl group, a hexadecyl group, a heptadecyl group, an octadecyl group, a nonadecyl group, and an icosyl group. Among these, from the viewpoint of availability, a methyl group, an ethyl group, an n-propyl group, an i-propyl group, an n-butyl group, a t-butyl group, a pentyl group, a hexyl group, a heptyl group, and an octyl group are preferable, a methyl group, an ethyl group, an n-propyl group, an i-propyl group, an n-butyl group, and a t-butyl group are more preferable, and a methyl group is particularly preferable.

Examples of the cycloalkyl group of R⁰ to Rⁿ include a cycloalkyl group having 3 to 20 carbons. Specific examples include a cyclopropyl group, a cyclobutyl group, a cyclopentyl group, a cyclohexyl group, a cycloheptyl group, a cyclooctyl group, a t-butylcyclohexyl group, an isobornyl group, and an adamantyl group. A cyclopropyl group, a cyclobutyl group, and an adamantyl group are preferable from the viewpoint of availability.

Examples of the aryl group of R⁰ to Rⁿ include an aryl group having 6 to 18 carbons. Specific examples thereof include a phenyl group, a benzyl group, and a naphthyl group.

Examples of the heterocyclic group of R⁰ to Rⁿ include a heterocyclic group having 5 to 18 carbons. Specific examples thereof include a γ-lactone group, an ε-caprolactone group, and a morpholine group. Examples of the heteroatom contained in the heterocyclic ring include an oxygen atom, a nitrogen atom, and a sulfur atom.

Examples of the substituent of R⁰ to Rⁿ each independently include a group or an atom selected from the group consisting of an alkyl group, an aryl group, a carboxy group, an alkoxycarbonyl group (-COOR'), a carbamoyl group (-CONR'R"), a cyano group, a hydroxy group, an amino group, an amide group (-NR'R"), a halogen atom, an allyl group, an epoxy group, an alkoxy group (-OR'), and a group exhibiting hydrophilicity or ionicity. Examples of R' or R" each independently include the same groups as R⁰ to Rⁿ (excluding heterocyclic groups).

Examples of the alkoxycarbonyl group as the substituent of R⁰ to Rⁿ include a methoxycarbonyl group.

Examples of the carbamoyl group as the substituent of R⁰ to Rⁿ include an N-methylcarbamoyl group and an N,N-dimethylcarbamoyl group.

Examples of the amide group as the substituent of R⁰ to Rⁿ include a dimethylamide group.

Examples of the halogen atom as the substituent of R⁰ to Rⁿ include a fluorine atom, a chlorine atom, a bromine atom, and an iodine atom.

Examples of the alkoxy group as the substituent of R⁰ to Rⁿ include an alkoxy group having 1 to 12 carbons. Specific examples thereof include a methoxy group.

Examples of the hydrophilic or ionic group as the substituent of R⁰ to Rⁿ include cationic substituents such as an alkali salt of a carboxy group or an alkali salt of a sulfoxyl group, a poly(alkylene oxide) group such as a polyethylene oxide group or a polypropylene oxide group, and a quaternary ammonium base.

R⁰ to Rⁿ are preferably at least one selected from an alkyl group and a cycloalkyl group, and more preferably an alkyl group.

As the alkyl group, a methyl group, an ethyl group, an n-propyl group, or an i-propyl group is preferable, and a methyl group is more preferable from the viewpoint of availability.

### X¹ to Xⁿ

In Formula (1), X¹ to xⁿ are preferably a methyl group in an amount of 80 mol% or more relative to 100 mol% of the total number of moles of X¹ to Xⁿ from the viewpoint of ease of synthesis of the macromonomer (b1).

### Z

In Formula (1), Z is a terminal group of the macromonomer (b1). Examples of the terminal group of the macromonomer (b1) include groups derived from a hydrogen atom and a radical polymerization initiator, like the terminal group of a polymer produced through known radical polymerization.

The lower limit of the content proportion of the methyl methacrylate unit contained in the macromonomer (b1) is not particularly limited. The content proportion of the methyl methacrylate unit being 50 mass% or more relative to 100 mass% of the total mass of the macromonomer (b1) is advantageous for improving impact resistance and transparency. The lower limit of the content proportion of the methyl methacrylate unit is preferably 50 mass% or more, more preferably 80 mass% or more, still more preferably 90 mass% or more, particularly preferably 95 mass% or more.

The upper limit of the content proportion of the methyl methacrylate unit is not particularly limited. The macromonomer (b1) may be 100 mass% of the methyl methacrylate unit. The content proportion of the methyl methacrylate unit may be 99 mass% or less relative to 100 mass% of the total mass of the macromonomer (b1).

In the method for producing a macromonomer copolymer, the polymerization reaction is preferably performed using a radical polymerization method. Examples of the radical polymerization method include bulk polymerization methods such as mass polymerization and cast polymerization; solution polymerization methods; and aqueous dispersion polymerization methods such as a suspension polymerization method and an emulsion polymerization method.

An aqueous dispersion polymerization method such as a suspension polymerization method or an emulsion polymerization method is preferable because the step of recovering the macromonomer copolymer can be simplified. The suspension polymerization method is more preferable from the viewpoint of good handleability of the resultant polymer particles.

In the suspension polymerization method, the macromonomer copolymer is produced in the form of spherical particles having an average particle size of about 5 µm to 1 mm. The resulting spherical particles have favorable handleability, and when used in processing operations such as extrusion and molding, there is little concern of dust scattering. Thus, the spherical particles are suitable as a resin composition. The resulting spherical particles are further preferable because good moldability is achieved in the resin composition obtained by the suspension polymerization method. Although the reason is not clear, it is presumed that a small amount of abnormal polymers generated through emulsion polymerization, a remaining emulsifier, and the like cause foreign matters and thickening, and as a result, the suspension polymerization method is better than the emulsion polymerization method.

Details of the suspension polymerization method will be described below.

The polymerization reaction in the production of the macromonomer copolymer can also be performed using a bulk polymerization method such as a mass polymerization method or a cast polymerization method. In this case, a step of heating and polymerizing the polymerizable mixture is included.

When the polymerization reaction in the production of the macromonomer copolymer is performed by a solution polymerization method, it is also possible to obtain a macromonomer copolymer by producing the macromonomer (b1) through solution polymerization, adding the monomer (b2) and a thermal polymerization initiator to the solution as it is, and performing a copolymerization reaction.

In the method for producing a macromonomer copolymer according to the present invention, the polymerizable mixture may contain a sulfur-containing chain transfer agent.

Here, the sulfur-containing chain transfer agent refers to a mercaptan compound, such as n-butyl mercaptan or n-octyl mercaptan, added as a chain transfer agent to adjust the molecular weight of the copolymer during polymerization.

When the polymerizable composition contains a sulfur-containing chain transfer agent, the upper limit of the content is preferably less than 0.01 parts by mass per 100 parts by mass of the polymerizable composition (X). When the upper limit of the content of the sulfur-containing chain transfer agent is less than 0.01 parts by mass, the widening of the composition distribution of the copolymer can be suppressed, and improved impact resistance can be achieved in the resultant resin molded body. The lower limit of the content of the sulfur-containing chain transfer agent is not particularly limited, but it is more preferable that the polymerizable composition does not contain a sulfur-containing chain transfer agent.

In the production of the macromonomer copolymer, polymerization can be performed so that the resulting macromonomer copolymer has a mass average molecular weight (Mw) of 240000 or more and 3500000 or less.

The lower limit of the mass average molecular weight (Mw) of the macromonomer copolymer is preferably 240000 or more, more preferably 300000 or more, still more preferably 600000 or more. When the Mw of the macromonomer copolymer is 240000 or more, the flexibility and impact resistance of the resin composition, molding material, and molded body of the present invention are improved.

The upper limit of the mass average molecular weight (Mw) of the macromonomer copolymer is preferably 3500000 or less, more preferably 3000000 or less, still more preferably 2000000 or less. When the Mw of the macromonomer copolymer is 3500000 or less, the transparency and moldability of the resin composition, molding material, and molded body of the present invention are improved. The above upper values and lower limit values can be combined in any manner.

In the present invention, the mass average molecular weight (Mw) of the macromonomer copolymer means a mass average molecular weight which is a relative molecular weight calibrated with polymethyl methacrylate (PMMA) as determined using gel permeation chromatography (GPC).

The method for controlling the mass average molecular weight (Mw) of the macromonomer copolymer to 240000 or more is not particularly limited. The Mw of the macromonomer copolymer can be controlled by adjusting the polymerization method, the type and addition amount of the polymerization initiator, the addition amount of the chain transfer agent, the polymerization temperature, and the like according to a well known technique by a person skilled in the art.

### Polymerizable Composition (X)

The polymerizable composition (X) is one of raw materials of the (meth)acrylic copolymer (B).

The content proportion (b1, unit: mass%) of the macromonomer (b1) and the content proportion (b2, unit: mass%) of the monomer (b2) contained in the polymerizable composition (X) are preferably b1:b2 = from 35 to 75 mass%:from 65 to 25 mass%, more preferably b1:b2 = from 40 to 70 mass%:from 60 to 30 mass%, still more preferably b1:b2 = from 45 to 70 mass%:from 55 to 30 mass%, particularly preferably b1:b2 = from 50 to 65 mass%:from 50 to 35 mass%, most preferably b1:b2 = from 55 to 65 mass%:from 45 to 35 mass%, relative to 100 mass% of the total mass of the polymerizable composition (X).

The content proportion (b1, unit: mass%) of the macromonomer (b1) and the content proportion (b2, unit: mass%) of the monomer (b2) contained in the polymerizable composition (X) are preferably b1:b2 = from 35:65 mass% to 75:25 mass%, more preferably b1:b2 = from 40:60 mass% to 70:30 mass%, still more preferably b1:b2 = from 45:55 mass% to 70:30 mass%, particularly preferably b1:b2 = from 50:50 mass% to 65:35 mass%, most preferably b1:b2 = from 55:45 mass% to 65:35 mass%, relative to 100 mass% of the total mass of the polymerizable composition (X).

When the lower limit of the content proportion of the macromonomer (b1) contained in the polymerizable composition (X) is 35 mass% or more, or the upper limit of the content proportion of the monomer (b2) is 65 mass% or less relative to 100 mass% of the total mass of the polymerizable composition (X), the handleability of the macromonomer copolymer is improved. When the lower limit of the content proportion of the monomer (b2) contained in the polymerizable composition (X) is 25 mass% or more, or the upper limit of the content proportion of the macromonomer (b1) is 75 mass% or less relative to 100 mass% of the total mass of the polymerizable composition (X), the impact resistance of the resin composition containing the macromonomer copolymer and the resultant resin molded body can be favorably maintained.

### Production of Macromonomer Copolymer through Suspension Polymerization

A case where the polymerization reaction is performed using a suspension polymerization method will be described in detail below.

In the method for producing a macromonomer copolymer, when a macromonomer copolymer is produced using a suspension polymerization method, specific examples thereof include methods (1) and (2) described below.
(1) A method including steps i) to v) described below. This method is a method in which the production of the macromonomer (b1) and the production of the macromonomer copolymer in the present invention are performed separately.
(2) A method being the same as the method (1) except for including steps I) to II) described below in place of steps i) to iii) described below among steps i) to v) described below. This method is a method of continuously performing the production of the macromonomer (b1) in the present invention and the production of the macromonomer copolymer of the present invention.

### i) Syrup Preparation Step

The bead-like macromonomer (b1) produced through suspension polymerization is dissolved in a solution containing the monomer (b2) to prepare a syrup, and this syrup is used as the polymerizable composition (X).

When the polymerizable composition (X) is prepared, a mixture containing the macromonomer (b1) and the monomer (b2) can be heated at a temperature equal to or lower than the boiling point of the monomer (b2) to promote dissolution of the macromonomer (b1). The temperature for preparing the polymerizable composition (X) is preferably in a range of from 20°C to 100°C, more preferably in a range of from 40°C to 80°C. When the radical polymerization initiator to be used does not react at the temperature for preparing the polymerizable composition (X), the polymerizable composition (X) is mixed with the radical polymerization initiator to prepare a polymerizable mixture, and then the polymerizable mixture can be heated.

### ii) Radical Polymerization Initiator Dissolution Step

When the radical polymerization initiator reacts at the temperature for preparing the polymerizable composition (X) obtained in the step i), the polymerizable composition (X) is once cooled to room temperature or lower, and then the radical polymerization initiator is added and uniformly dissolved to prepare a polymerizable mixture. The temperature of the polymerizable composition (X) when the radical polymerization initiator is added is preferably equal to or lower than a temperature obtained by subtracting 15°C from the 10 hour half-life temperature of the radical polymerization initiator.

### iii) Aqueous Solution Preparation Step

The polymerizable mixture and an aqueous solution are mixed and then stirred to prepare a suspension in which droplets of the polymerizable mixture are dispersed in the aqueous solution. The aqueous solution is an aqueous solution for dispersing the polymerizable mixture, and may contain a dispersant, an electrolyte, and other auxiliary agents. By appropriately selecting the combination of the dispersant and the electrolyte, the dispersibility of the droplets of the polymerizable mixture formed in the aqueous solution can be controlled when the polymerizable mixture is dispersed in the aqueous solution.

As the water used for the aqueous solution, deionized water is preferably used because the droplets of the polymerizable mixture have favorable dispersibility.

Examples of the dispersant include an alkali metal salt of poly(meth)acrylic acid, a copolymer of an alkali metal salt of (meth)acrylic acid and a (meth)acrylic acid ester, a copolymer of an alkali metal salt of sulfoalkyl (meth)acrylate and a (meth)acrylic acid ester, an alkali metal salt of polystyrene sulfonic acid, a copolymer of an alkali metal salt of styrene sulfonic acid and a (meth)acrylic acid ester, and a copolymer including a combination of these monomers; and polyvinyl alcohol, methyl cellulose, starch, and hydroxyapatite having a saponification degree of 70 to 100%.

One of these may be used alone, or two or more types of these may be used in combination.

Among these, a copolymer of an alkali metal salt of sulfoalkyl (meth)acrylate and a (meth)acrylic acid ester and a copolymer of an alkali metal salt of (meth)acrylic acid and a (meth)acrylic acid ester, which have favorable dispersion stability during suspension polymerization, are preferable.

The dispersant is used, for example, in a range from 0.0005 to 0.5 parts by mass per 100 parts by mass of the polymerizable composition (X).

Examples of the electrolyte include sodium carbonate, sodium sulfate, and manganese sulfate.

The electrolyte is used, for example, in a range from 0.01 to 1.0 parts by mass per 100 parts by mass of the polymerizable composition (X).

### I) Syrup Preparation Step

A solution containing the monomer (b2) is added in a state where the bead-like macromonomer (b1) produced through suspension polymerization is dispersed in an aqueous solution to prepare the polymerizable composition (X).

The temperature for dissolving the macromonomer (b1) in the solution containing the monomer (b2) is preferably in a range from 20°C to 100°C, more preferably in a range from 40°C to 90°C, still more preferably in a range from 50°C to 80°C. As the aqueous solution, the same aqueous solution as in iii) described above can be used.

### II) Radical Polymerization Initiator Dissolution Step

When the radical polymerization initiator reacts at the temperature for preparing the polymerizable composition (X) obtained in the step I), the polymerizable composition (X) is once cooled to room temperature or lower, and then the radical polymerization initiator is added and uniformly dissolved to prepare a polymerizable mixture. The temperature of the polymerizable composition (X) when the radical polymerization initiator is added is preferably equal to or lower than a temperature obtained by subtracting 15°C from the 10 hour half-life temperature of the radical polymerization initiator.

When the polymerization reaction is performed in the presence of a radical polymerization initiator, as the radical polymerization initiator, known organic peroxides such as 2,4-dichlorobenzoyl peroxide and t-butyl peroxypivalate, and known azo compounds such as 2,2'-azobisisobutyronitrile and 2,2'-azobis(2,4-dimethylvaleronitrile) can be used.

The blending amount of the radical polymerization initiator can be appropriately selected by those skilled in the art according to a well-known technique. Usually, the blending amount of the radical polymerization initiator is from 0.0001 to 10 parts by mass per 100 parts by mass of the total amount of the polymerizable composition (X).

### iv) Polymerization Reaction Step

Next, the temperature of the resulting suspension is raised with stirring to start a polymerization reaction. It is preferable to remove dissolved oxygen by subjecting the polymerizable mixture before heating and the aqueous solution to vacuum degassing or nitrogen purging.

The polymerization temperature at the time of performing the polymerization reaction is an important condition for producing a macromonomer copolymer in high yield. The polymerization temperature as used herein refers to the temperature of the suspension. The polymerization temperature is preferably from 50°C to 90°C, more preferably from 60°C to 85°C, still more preferably from 65°C to 80°C. When the polymerization temperature is too low, there is a concern that the reaction proceeds slowly and the polymerization time becomes long. When the polymerization temperature is too high, cleavage of an adduct radical which is a reaction intermediate preferentially occurs, and the yield of the macromonomer copolymer tends to decrease.

In the late stage of the polymerization reaction, the temperature of the suspension may be increased for the purpose of increasing the reaction rate of the polymerizable composition (X) and eliminating the unreacted radical polymerization initiator. The temperature at which the suspension is heated is preferably 80°C or higher, more preferably 85°C or higher. The heating time may be determined by calculating the time until the radical polymerization initiator is eliminated, and is usually about 30 minutes to 2 hours.

### V) Recovery Step

After the step described above, the suspension is cooled to a temperature equal to or lower than room temperature, and then the produced bead-like copolymer is recovered using a known method such as filtration. As necessary, a washing step for removing impurities such as a dispersant and an electrolyte, a step of removing beads mixed with bubbles, a drying step, and the like can be performed.

The finally produced bead-like macromonomer copolymer is used as the (meth)acrylic copolymer (B) of the present invention.

### Core-Shell Rubber (C)

The resin composition of the present invention may contain a core-shell rubber (C) as necessary.

The core-shell rubber (C) is a component different from the (meth)acrylic copolymer (B).

The core-shell rubber (C) is a particulate rubber containing a core composed of a rubber component and a shell component having a function such as compatibility with a matrix.

The core-shell rubber (C) is used for the purpose of imparting flexibility and impact resistance to the resin composition, molding material, resin molded body, and the film of the present invention.

The core-shell rubber (C) can be appropriately selected from generally available core-shell rubbers and used. Examples of the type of the core of the core-shell rubber include an acrylic rubber containing acrylate as a repeating unit, a butadiene rubber containing butadiene as a repeating unit, a butadiene-acrylic composite rubber containing butadiene and acrylate as repeating units, and a silicone-acrylic composite rubber containing dimethylsiloxane and acrylate as repeating units.

Among these, the refractive index of the core and the refractive index of the (meth)acrylic polymer (A) are preferably close to each other because the transparency of the resin composition is improved. From the viewpoint of the refractive index, the type of the core is preferably an acrylic rubber containing acrylate as a repeating unit, or a butadiene-acrylic composite rubber containing butadiene and acrylate as repeating units.

The type of the core is preferably an acrylic rubber, or a silicone-acrylic composite rubber containing dimethylsiloxane and acrylate as repeating units because the weather resistance of the resin composition is improved.

From the viewpoint of the effect of improving toughness and impact resistance, the type of the core is preferably a butadiene rubber containing butadiene as a repeating unit, a butadiene-acrylic composite rubber containing butadiene and acrylate as repeating units, or a silicone-acrylic composite rubber containing dimethylsiloxane and acrylate as repeating units.

The type of the core can be appropriately selected and used depending on the required performance of the resin molded body and the film. A plurality of core-shell rubbers having different core types may be used in combination.

The core-shell rubber (C) is not particularly limited, but preferably has a multilayer structure of three or more layers including an inner layer, an intermediate layer, and a graft layer.

The average particle size of the core-shell rubber (C) is preferably 50 nm or more, more preferably 100 nm or more, still more preferably 200 nm or more. The average particle size of the core-shell rubber (C) is preferably 1000 nm or less, more preferably 700 nm or less, still more preferably 500 nm or less. When the average particle size is 50 nm or more, it functions as a rubber, and toughness and impact resistance can be improved. When the average particle size is 1000 nm or less, the number of particles increases, and toughness and impact resistance are improved.

The amount of the core-shell rubber (C) used is preferably small because the core-shell rubber (C) causes foreign matter defects during production of an extruded film. When the core-shell rubber (C) is used, the content thereof is preferably 20 mass% or less, more preferably 10 mass% or less, still more preferably 5 mass% or less, relative to 100 mass% of the total of the resin composition of the present invention. It is most preferable not to use the core-shell rubber (C).

### Antiblocking Agent (D)

When a film is produced using the resin composition of the present invention, it is preferable to add an antiblocking agent (D) for the purpose of preventing blocking at the time of winding the film. The antiblocking agent (D) is also called an antiblocking agent (AB agent) or a lubricant. As the antiblocking agent, various antiblocking agents that are generally available can be used.

As the antiblocking agent (D), various resin particles and inorganic particles can be used. Examples of the resin particles include acrylic particles, polystyrene particles, polyester particles, silicone fine particles, and polyvinyl chloride particles. Examples of the inorganic particles include colloidal silica, fumed silica, zeolite, acicular silica, talc, aluminum oxide, and mineral powder.

Among these, acrylic particles are preferably used because the resin composition of the present invention contains the (meth)acrylic polymer (A). By selecting the acrylic particles, the difference in refractive index from the resin composition of the present invention is reduced, and a resin molded body and a film having excellent transparency are produced.

The acrylic particles are preferably crosslinked because the antiblocking agent maintains a particle shape when the resin composition is melt-kneaded. Further, it is preferable that the antiblocking agent does not contain large particles for the purpose of preventing resin clogging and pressure loss during melt-kneading and melt-molding, clogging of the filter, and the like. From the above reasons, it is preferable to use crosslinked acrylic particles having a small particle size and few coarse particles as the antiblocking agent (D). It is preferable to use monodisperse crosslinked acrylic particles because the number of coarse particles is small.

The average particle size of the antiblocking agent (D) is preferably 10 µm or less, more preferably 5 µm or less, still more preferably 2 µm or less, most preferably 1 µm or less. When the average particle size of the antiblocking agent (D) is 10 µm or less, the antiblocking performance can be exhibited with a small addition amount, and the influence on transparency can be suppressed to a small level. The average particle size of the antiblocking agent (D) is preferably 10 nm or more, preferably 50 nm or more, and preferably 100 nm or more. When the average particle size of the antiblocking agent (D) is 10 nm or more, the antiblocking performance can be exhibited.

The addition amount of the antiblocking agent is preferably 0.01 mass% or more, more preferably 0.05 mass% or more, relative to 100 mass% of the total of the resin composition of the present invention. When the addition amount of the antiblocking agent (D) is 0.01 mass% or more, the antiblocking performance can be exhibited. The addition amount of the antiblocking agent (D) is preferably 2 mass% or less, more preferably 1 mass% or less, still more preferably 0.5 mass% or less, relative to 100 mass% of the total of the resin composition of the present invention. When the addition amount of the antiblocking agent (D) is 2 mass% or less, adverse effects such as a decrease in transparency can be suppressed.

### Additional Component

The resin composition of the present invention may contain an additional component besides the (meth)acrylic polymer (A), the (meth)acrylic copolymer (B), the core-shell rubber (C), and the antiblocking agent (D).

The additional component is added to the resin composition as necessary. Examples of the additional component include a mold release agent, an antioxidant, a heat stabilizer, an impact resistance improver, a flexibility imparting agent, a weather resistance improver, a colorant, an inorganic pigment, an organic pigment, carbon black, ferrite, a conductivity imparting agent, an ultraviolet absorber, an infrared absorber, an inorganic filler, a reinforcing agent, a plasticizer, an antiplasticizer, a neutralizer, a crosslinking agent, a flame retardant, an antiseptic agent, an insect repellent, an aromatic agent, a radical scavenger, and a sound absorbing material. One type of these additional components may be used alone, or two or more types thereof may be used in combination.

### Method for Producing Resin Composition and Molding Material

The resin composition of the present invention can be produced by mixing raw materials according to a common method, and the method is not particularly limited. Examples of the mixing method include a method in which the raw materials are placed in a single-screw extruder or a twin-screw extruder and heated, melted, and kneaded at about 220 to 280°C.

The resin composition of the present invention is suitably used as a molding material, for example, a molding material for a film, in particular, a molding material for an extruded film by being processed into a pellet form after being heated, melted, and kneaded.

### Resin Molded Body

The resin composition and the molding material of the present invention are shaped by a known melt molding method such as extrusion molding, injection molding, compression molding, or hollow molding to form a resin molded body.

The shape of the resin molded body of the present invention is not particularly limited, and examples thereof include a film shape, a sheet shape, a plate shape, a substantially box shape, and a three-dimensional shape having a curved surface portion.

### Application of Resin Molded Body

The resin molded body of the present invention is excellent in flexibility with which the molded body can be handled as a film and transparency in a wide use temperature range. Thus, the resin molded body of the present invention can be suitably used for front plates for displays such as liquid crystal displays and organic EL displays, signboard articles, illumination articles, home appliances, vehicle interior and exterior materials, industrial materials, building materials, lenses, light guide plates, light collecting members, optical films used for displays such as liquid crystal displays and organic EL displays, and the like.

Examples of the resin molded body produced by molding the molding material of the present invention include a polarizing plate protective film and a polarizing plate. The resin molded body of the present invention is useful as a constituent member of these image display devices.

### Examples

Hereinafter, the present invention will be described in more detail with reference to Examples and Comparative Examples. The present invention is not limited by the following examples.

Hereinafter, "part(s)" means "part(s) by mass".

### Evaluation Method

Evaluations in Examples and Comparative Examples were performed by methods described below.

### Mass Average Molecular Weight (Mw) and Number Average Molecular Weight (Mn) of Macromonomer (b1)

The mass average molecular weight (Mw) and the number average molecular weight (Mn) of the macromonomer (b1) produced in Examples and Comparative Examples were measured using a gel permeation chromatography method (GPC). A solution prepared by dissolving 10 mg of the produced copolymer in 10 mL of tetrahydrofuran and filtering the solution through a 0.45 µm filter was used as a sample for GPC measurement.

For the measurement, a polymer measurement guard column (available from Tosoh Corporation, trade name: TSK-GUARD COLUMN SUPER H-H) and two polymer measurement columns (available from Tosoh Corporation, trade name: TSK-GEL SUPER HM-H) were connected in series to a gel permeation chromatography measurement apparatus (available from Tosoh Corporation, model name: HLC-8320 type) and used.

A differential refractometer (RI) was used as a detector.

The measurement was performed under the conditions of a separation column temperature of 40°C, a mobile phase of tetrahydrofuran, a mobile phase flow rate of 0.6 mL/min, and a sample injection amount of 10 µL.

Using several types of polymethyl methacrylate having known molecular weights (available from Polymer Laboratories, peak molecular weight (Mp) from 1560 to 19500000) as standard polymers, calibration curves were produced, and the Mw and the Mn, which were relative molecular weights calibrated with polymethyl methacrylate, were determined.

### Mass Average Molecular Weight (Mw) and Number Average Molecular Weight (Mn) of Macromonomer Copolymer

The mass average molecular weight (Mw) and the number average molecular weight (Mn) of the macromonomer copolymer, i.e., the (meth)acrylic copolymer (B) produced in Examples and Comparative Examples were measured using a gel permeation chromatography method (GPC). A solution prepared by dissolving 10 mg of the produced copolymer in 10 mL of tetrahydrofuran and filtering the solution through a 0.45 µm filter was used as a sample for GPC measurement.

For the measurement, a polymer measurement guard column (available from Tosoh Corporation, trade name: TSK-GUARD COLUMN SUPER H-H) and one ultra-polymer measurement column (available from Tosoh Corporation, trade name: TSK-GEL GMHHR-H) were connected in series to a high-performance liquid chromatography measurement apparatus (available from Tosoh Corporation, model name: HLC-8320 type) and used.

A differential refractometer (RI) was used as a detector.

The measurement was performed under the conditions of a separation column temperature of 40°C, a mobile phase of tetrahydrofuran, a mobile phase flow rate of 0.6 mL/min, and a sample injection amount of 10 µL.

Using several types of polymethyl methacrylate having known molecular weights (available from Polymer Laboratories, peak molecular weight (Mp) from 1560 to 19500000) as standard polymers, calibration curves were produced, and the Mw and the Mn, which were relative molecular weights calibrated with polymethyl methacrylate, were determined.

### Film Handleability: Evaluation of Cutter Resistance

The extruded films produced in Examples and Comparative Examples were incised with scissors and evaluated as follows from the running condition when a blade was caused to run using a cutter (available from OLFA Corporation, trade name: A-type). The angle of the blade with respect to the film was adjusted to about 45° to 60°.
⊚: Measurements are made 10 times, and the blade can run 9 times or more.
∘: Measurements are made 10 times, and the blade can run 5 times or more and less than 9 times.
×: Measurements are made 10 times, and the blade can run less than 5 times. Alternatively, the blade cannot run.

### Other Film Evaluation: Surface Smoothness of Film

The extruded films produced in Examples and Comparative Examples were irradiated with a fluorescent lamp indoors, and the surface smoothness was determined by whether the image of the fluorescent lamp reflected on the film was clearly seen.
∘: There is no fine unevenness, and the edge of the fluorescent lamp looks straight.
△: Fine unevenness is slightly seen, and the edge of the fluorescent lamp is slightly disturbed.
×: There is fine unevenness, and the edge of the fluorescent lamp looks disturbed.

### Other Film Evaluation: Antiblocking Property

Two extruded films produced in Examples and Comparative Examples were rubbed against each other in a state of being overlapped, and evaluated with the ease of movement of the films.
∘: Films move.
×: Films do not move.

### Raw Materials

The abbreviations of the compounds used in Examples and Comparative Examples are as follows.
MMA: methyl methacrylate (available from Mitsubishi Chemical Corporation)
MA: methyl acrylate (available from Mitsubishi Chemical Corporation)
BA: n-butyl acrylate (available from Mitsubishi Chemical Corporation)
ST: styrene (available from FUJIFILM Wako Pure Chemical Corporation)
Dispersant (1): dispersant produced in Production Example 1
Chain transfer agent (1): chain transfer catalyst produced in Production Example 2
Polymerization initiator (1): 1,1,3,3-tetramethylbutyl peroxy 2-ethylhexanoate (available from NOF Corporation, trade name: Perocta O)
Polymerization initiator (2): 2,2'-azobis(2-methylbutyronitrile) (available from FUJIFILM Wako Pure Chemical Corporation, trade name: V-59)
(Meth)acrylic polymer (A1-1): (meth)acrylic polymer containing methyl methacrylate unit in an amount of 90 mass% or more, mass average molecular weight: 140000, MFR: 1.0 g/10 min or less (230°C, 37.3 N)
(Meth)acrylic polymer (A1-2): (meth)acrylic polymer containing methyl methacrylate unit in an amount of 90 mass% or more, mass average molecular weight: 150000, MFR: 1.0 g/10 min or less (230°C, 37.3 N)
(Meth)acrylic polymer (A1-3): (meth)acrylic polymer containing methyl methacrylate unit in an amount of 90 mass% or more, mass average molecular weight: 170000, MFR: 1.0 g/10 min or less (230°C, 37.3 N)
(Meth)acrylic polymer (A2-1): (meth)acrylic polymer containing methyl methacrylate unit in an amount of 80 mass% or more, mass average molecular weight: 100000, MFR: 14 g/10 min (230°C, 37.3 N)
(Meth)acrylic polymer (A-1): (meth)acrylic polymer containing methyl methacrylate unit in an amount of 95 mass% or more, mass average molecular weight: 100000, MFR: 2 g/10 min (230°C, 37.3 N)
(Meth)acrylic polymer (A-2): (meth)acrylic polymer containing methyl methacrylate unit in an amount of 90 mass% or more, mass average molecular weight: 120000, MFR: 14 g/10 min (230°C, 37.3 N)
Antiblocking agent (D) (MX-80H3wT): trade name, crosslinked acrylic monodispersed particles available from Soken Chemical & Engineering Co., Ltd., average particle size: 0.8 µm

### Production Example 1: Synthesis of Dispersant (1)

A reaction apparatus equipped with a stirrer, a cooling tube, and a thermometer was charged with 61.6 parts of 17 mass% aqueous potassium hydroxide solution, 19.1 parts of MMA, and 19.3 parts of deionized water. Next, the liquid in the reaction apparatus was stirred at room temperature, and after confirming an exothermic peak, the liquid was stirred for 4 hours. Thereafter, the reaction liquid in the reaction apparatus was cooled to room temperature to produce an aqueous potassium methacrylate solution.

Next, in a polymerization apparatus equipped with a stirrer, a cooling tube, and a thermometer, 900 parts of deionized water, 70 parts of a 42 mass% aqueous solution of sodium 2-sulfoethyl methacrylate (available from Mitsubishi Chemical Corporation, trade name: Acryester SEM-Na), 16 parts of the above-described aqueous potassium methacrylate solution, and 7 parts of MMA were placed and stirred, and the temperature of the liquid in the reaction apparatus was raised to 50°C while the inside of the polymerization apparatus was purged with nitrogen. To the polymerization apparatus, 0.053 parts of V-50 (available from FUJIFILM Wako Pure Chemical Corporation, 2,2'-azobis(2-methylpropionamidine) dihydrochloride, trade name) was added as a polymerization initiator, and the temperature of the liquid in the reaction apparatus was raised to 60°C. After charging of the polymerization initiator, 1.4 parts of MMA was added in 5 portions in total (total amount of MMA: 7 parts) every 15 minutes. Thereafter, the liquid in the polymerization apparatus was held at 60°C for 6 hours while being stirred, and then cooled to room temperature to produce a dispersant (1), which was a transparent aqueous solution and had a solid content of 8 mass%.

### Production Example 2: Synthesis of Chain Transfer Agent (1)

In a synthesizing apparatus equipped with a stirrer, under a nitrogen atmosphere, 2.00 g (8.03 mmol) of cobalt(II) acetate tetrahydrate (Wako special grade chemical available from FUJIFILM Wako Pure Chemical Corporation), 3.86 g (16.1 mmol) of diphenylglyoxime (EP Grade available from Tokyo Chemical Industry Co., Ltd.), and 100 mL of diethyl ether deoxygenated in advance by nitrogen bubbling were placed, and the mixture was stirred at room temperature for 2 hours.

Subsequently, 20 mL of boron trifluoride diethyl ether complex (EP Grade available from Tokyo Chemical Industry Co., Ltd.) was added thereto, and the mixture was further stirred for 6 hours. The resultant mixture was filtered. The collected solid was washed with diethyl ether and dried at 100 MPa or less at 20°C for 12 hours to produce 5.02 g (7.93 mmol, yield: 99 mass%) of a chain transfer agent (1) in the form of a reddish brown solid.

### Production Example 3: Synthesis of Macromonomer (b1)

In a polymerization apparatus equipped with a stirrer, a cooling tube, and a thermometer, 145 parts of deionized water, 0.1 parts of sodium sulfate (Na₂SO₄), and 0.26 parts by mass of the dispersant (1) (solid content: 8 mass%) produced in Production Example 1 were added and stirred to form a homogeneous aqueous solution. Next, 95 parts of MMA, 5.0 parts of MA, 0.0014 parts of the chain transfer agent (1) produced in Production Example 2, and 0.25 parts of the polymerization initiator (1) were added to produce an aqueous dispersion.

Next, the inside of the polymerization apparatus was sufficiently purged with nitrogen, and the aqueous dispersion was heated to 80°C and then held for 3 hours, and then heated to 90°C and held for 2 hours. Thereafter, the reaction liquid was cooled to 40°C to produce an aqueous suspension of the macromonomer. The aqueous suspension was filtered through a filter cloth. The filtered product was washed with deionized water and dried at 40°C for 16 hours to produce a bead-like macromonomer (b1).

The resulting macromonomer (b1) had a number average molecular weight (Mn) of 21300 and a mass average molecular weight (Mw) of 39100.

The Tg of the homopolymer of methyl methacrylate (MMA) is 105°C (POLYMER HANDBOOK FOURTH EDITION 2003), and the Tg of the homopolymer of methyl acrylate (MA) is 10°C (POLYMER HANDBOOK FOURTH EDITION 2003). The Tg of the macromonomer (b1) was 99°C when calculated using the Fox equation.

### Production Example 4: (Meth)Acrylic Copolymer (B)

In a polymerization apparatus equipped with a stirrer, a cooling tube, and a thermometer, 60 parts of the macromonomer (bl) produced in Production Example 3, 150 parts of deionized water, 0.26 parts of the dispersant (1), and 0.3 parts of sodium sulfate were added and stirred to produce an aqueous suspension. Next, the temperature in the polymerization apparatus was raised to 70°C, and then 33.2 parts of BA and 6.8 parts of ST were slowly added. Thereafter, the macromonomer (b1) was dissolved in BA and ST by holding at 70°C for 1 hour with stirring to produce a dispersion. Subsequently, the inside of the polymerization apparatus was cooled to 40°C, and then 0.5 parts of the polymerization initiator (2) was added and stirred for 30 minutes for dissolution. Next, the inside of the polymerization apparatus was sufficiently purged with nitrogen, and the aqueous dispersion was heated to 82°C and then held for 4 hours, and then heated to 90°C and held for 1 hour. Thereafter, after cooling to 40°C or lower, the resultant dispersion was filtered with a filter cloth, and the filtered product was washed with deionized water. The filtered product washed with water was dried at 40°C for 12 hours using a hot air circulating dryer, to thereby produce a (meth)acrylic copolymer (B), i.e., a bead-like macromonomer copolymer.

The resulting (meth)acrylic copolymer (B) had a number average molecular weight (Mn) of 75000 and a mass average molecular weight (Mw) of 1300000.

The Tg of the homopolymer of styrene (ST) is 100°C (POLYMER HANDBOOK FOURTH EDITION 2003), and the Tg of the homopolymer of n-butyl acrylate (BA) is -54°C (POLYMER HANDBOOK FOURTH EDITION 2003). The Tg of the polymer (B2) contained in the (meth)acrylic copolymer (B) was -37.5°C when calculated using the Fox equation.

### Example 1

A pellet-shaped resin composition was produced using a twin-screw extruder (product name: TEM-26SX, 26 mmφ, L/D ≈ 48) available from Shibaura Machine Co., Ltd.

As the (meth)acrylic polymer (A1), 70 parts of (A1-1) was used, and 30 parts of the (meth)acrylic copolymer (B) produced in Production Example 4 was used. The mixture was melt-kneaded under the conditions of a cylinder temperature of from 200 to 230°C and a die temperature of 230°C using a 26 mmφ screw type twin-screw extruder (available from Shibaura Machinery Co., Ltd., model name: TEM-26SX), to thereby produce a pellet-shaped resin composition (molding material).

Using the resultant pellets of the resin composition, a film was formed at 240°C with a single-screw extruder (GM30-35 available from GM ENGINEERING Co., Ltd.) to which a T die was attached, to produce an extruded film having a thickness of 50 µm. This extruded film was evaluated as described above. The evaluation results are shown in Table 1.

### [Examples 2 to 5, Comparative Examples 1 and 2]

In the same procedure as in Example 1, pellet-shaped resin compositions having the resin compositions shown in Table 1 were produced, and films were produced by extrusion molding and evaluated. The formulations of the resin compositions and the evaluation results of the produced films are shown in Table 1.

**[Table 1]**

| | | | | Example 1 | Example 2 | Example 3 | Example 4 | Example 5 | Comparative Example 1 | Comparative Example 2 |
|---|---|---|---|---|---|---|---|---|---|---|
| Resin Composition | (Meth)acrylic polymer (A1) | A1-1 | parts by mass | 70 | 65 | 65 | | | | |
| | | A1-2 | parts by mass | | | | 65 | | | |
| | | A1-3 | parts by mass | | | | | 65 | | |
| | (Meth)acrylic polymer (A2) | A2-1 | parts by mass | | 5 | 5 | 5 | 5 | | |
| | (Meth)acrylic polymer (A) | A-1 | parts by mass | | | | | | 70 | |
| | | A-2 | parts by mass | | | | | | | 70 |
| | (Meth)acrylic copolymer (B) | Production Example 4 | parts by mass | 30 | 30 | 30 | 30 | 30 | 30 | 30 |
| | Antiblocking agent (D) | MX-80H3wT | parts by mass | | | 0.1 | 0.1 | 0.1 | | |
| Evaluation results | Film handleability | Cutter resistance | | ○ | ○ | ○ | ⊚ | ⊚ | × | × |
| | Other film evaluation | Surface smoothness | | × | ○ | ○ | ○ | Δ | ○ | Δ |
| | Other film evaluation | Antiblocking property | | × | × | ○ | ○ | ○ | × | × |

Comparison of Examples 1 to 5 with Comparative Examples 1 and 2 shows that, in Examples 1 to 5, wherein the (meth)acrylic polymer (A) as a random copolymer and/or a homopolymer contains a methyl methacrylate unit in an amount of 50 mass% or more and contains the (meth)acrylic polymer (A1) having a mass average molecular weight calibrated with polystyrene of more than 130000 as determined by gel permeation chromatography (GPC) measurement, improved cutter resistance and excellent film handleability are achieved. In particular, in Examples 4 and 5, wherein the (meth)acrylic polymer (A1) having a large mass average molecular weight is used, very good cutter resistance is achieved.

However, (A1-1), (A1-2), or (A1-3) used as the (meth)acrylic polymer (A1) in Examples 1 to 5 has low fluidity, and thus it cannot be melt-molded alone for forming a film. By combining the (meth)acrylic polymer (A1) and the (meth)acrylic copolymer (B), a film having good cutter resistance can be formed by melt-molding.

Further, Examples 2 to 5 show that inclusion of the (meth)acrylic polymer (A2) improves the surface smoothness of the resulting film.

In addition, Examples 3 to 5 show that inclusion of the antiblocking agent (D) achieves the effect of an antiblocking property.

### Industrial Applicability

The resin composition and the molding material of the present invention contain a (meth)acrylic polymer (A1) and a (meth)acrylic copolymer (B) as constituent components. According to the resin molded body of the present invention, which is produced by molding the molding material, a film having good handleability and further having good surface smoothness can be produced.

Although the present invention has been described in detail with reference to specific embodiments, it will be apparent to those skilled in the art that various modifications can be made without departing from the spirit and scope of the present invention.

The present application is based on JP 2023-151439 filed on September 19, 2023, which is incorporated by reference in its entirety.

## Claims

1. A resin composition comprising:
a (meth)acrylic polymer (A) that is a random copolymer and/or a homopolymer; and
a (meth)acrylic copolymer (B) that is a block copolymer and/or a graft copolymer, wherein
the (meth)acrylic polymer (A) contains a repeating unit derived from methyl methacrylate in an amount of 50 mass% or more,
the (meth)acrylic polymer (A) contains a (meth)acrylic polymer (A1) having a mass average molecular weight calibrated with polystyrene of more than 130000 as determined by gel permeation chromatography (GPC) measurement,
the (meth)acrylic copolymer (B) is a polymer containing a polymer (B1) and a polymer (B2) in a same molecule,
the polymer (B1) is a polymer containing a unit derived from methyl methacrylate in an amount of 50 mass% or more and having a glass transition temperature of higher than 0°C, and
the polymer (B2) is a polymer having a glass transition temperature of 0°C or lower.

2. The resin composition according to claim 1, wherein
the (meth)acrylic polymer (A) further contains a (meth)acrylic polymer (A2),
the (meth)acrylic polymer (A2) has a melt flow rate of 7.0 g/10 min or more under conditions of 230°C and 37.3 N in accordance with JIS K7210 or ISO 1133, and
the (meth)acrylic polymer (A2) is contained in an amount of from 3 to 15 mass% relative to 100 mass% of a total of the resin composition.

3. The resin composition according to claim 1, wherein the (meth)acrylic polymer (A1) has a melt flow rate of less than 7.0 g/10 min under conditions of 230°C and 37.3 N in accordance with JIS K7210 or ISO 1133.

4. The resin composition according to claim 1, wherein the (meth)acrylic copolymer (B) is contained in an amount of 15 mass% or more relative to 100 mass% of a total of the resin composition.

5. The resin composition according to claim 1, wherein the (meth)acrylic copolymer (B) has a mass average molecular weight of more than 300000.

6. The resin composition according to claim 1, wherein the (meth)acrylic copolymer (B) contains a repeating unit derived from a macromonomer (b1) represented by General Formula (1) described below: 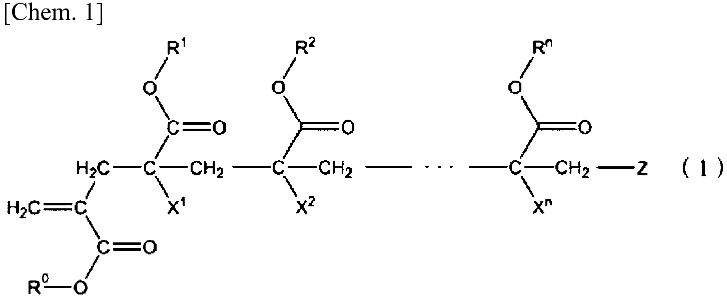 [in Formula (1), R⁰ to Rⁿ are each independently a hydrogen atom, an alkyl group, a cycloalkyl group, an aryl group, or a heterocyclic group; X¹ to Xⁿ are each independently a hydrogen atom or a methyl group; Z is a terminal group; and n is a natural number of from 1 to 10000].

7. A molding material comprising the resin composition described in any one of claims 1 to 6.

8. The molding material according to claim 7, wherein the molding material is a molding material for a film.

9. The molding material according to claim 7, wherein the molding material is a molding material for an extruded film.

10. A resin molded body produced by molding the molding material described in claim 7.

11. An optical film produced by molding the molding material described in claim 7.

12. A polarizing plate protective film produced by molding the molding material described in claim 7.

13. A polarizing plate comprising the resin molded body described in claim 10.

14. An image display device comprising the resin molded body described in claim 10.

15. A method for producing a resin composition by mixing a (meth)acrylic polymer (A) that is a random copolymer and/or a homopolymer and
a (meth)acrylic copolymer (B) that is a block copolymer and/or a graft copolymer, wherein
the (meth)acrylic polymer (A) contains a repeating unit derived from methyl methacrylate in an amount of 50 mass% or more,
the (meth)acrylic polymer (A) contains a (meth)acrylic polymer (A1) having a mass average molecular weight calibrated with polystyrene of more than 130000 as determined by gel permeation chromatography (GPC) measurement,
the (meth)acrylic copolymer (B) is a polymer containing a polymer (B1) and a polymer (B2) in a same molecule,
the polymer (B1) is a polymer containing a unit derived from methyl methacrylate in an amount of 50 mass% or more and having a glass transition temperature of higher than 0°C, and
the polymer (B2) is a polymer having a glass transition temperature of 0°C or lower.

16. The method for producing a resin composition according to claim 15, wherein
the (meth)acrylic polymer (A) further contains a (meth)acrylic polymer (A2),
the (meth)acrylic polymer (A2) has a melt flow rate of 7.0 g/10 min or more under conditions of 230°C and 37.3 N in accordance with JIS K7210 or ISO 1133, and
the (meth)acrylic polymer (A2) is contained in an amount of from 3 to 15 mass% relative to 100 mass% of a total of the resin composition.

17. The method for producing a resin composition according to claim 15, wherein the (meth)acrylic polymer (A1) has a melt flow rate of less than 7.0 g/10 min under conditions of 230°C and 37.3 N in accordance with JIS K7210 or ISO 1133.

18. The method for producing a resin composition according to claim 15, wherein the resin composition contains the (meth)acrylic copolymer (B) in an amount of 15 mass% or more relative to 100 mass% of a total of the resin composition.

19. The method for producing a resin composition according to claim 15, wherein the (meth)acrylic copolymer (B) has a mass average molecular weight of more than 300000.

20. The method for producing a resin composition according to claim 15, wherein the (meth)acrylic copolymer (B) contains a repeating unit derived from a macromonomer (b1) represented by General Formula (1) described below: 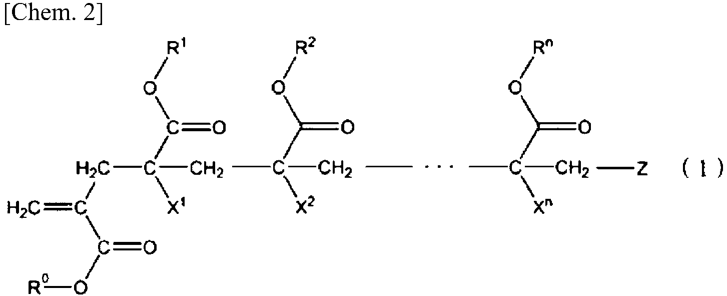 [in Formula (1), R⁰ to Rⁿ are each independently a hydrogen atom, an alkyl group, a cycloalkyl group, an aryl group, or a heterocyclic group; X¹ to Xⁿ are each independently a hydrogen atom or a methyl group; Z is a terminal group; and n is a natural number of from 1 to 10000].

21. A method for producing a resin molded body, the method comprising producing a resin composition by the method for producing a resin composition described in any of claims 15 to 20, and molding a molding material containing the resin composition.
